# EUROPEAN PATENT APPLICATION

(11) **EP 4 583 619 A1**
(43) Date of publication of application: **09.07.2025**
(21) Application number: 22956906.6
(22) Date of filing: 31.08.2022
(51) Int. Cl.: H04W 74/00

(54) **WIRELESS COMMUNICATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: BAI, Nianhe, Dongguan, Guangdong 523860 (CN); HUANG, Lei, Singapore 049483 (SG); LU, Liuming, Dongguan, Guangdong 523860 (CN); HOU, Ronghui, Dongguan, Guangdong 523860 (CN)
(74) Representative: Penza, Giancarlo
(86) International application number: PCT/CN2022/116341
(87) International publication number: WO 2024/045080

(57) **Abstract**

Provided in the embodiments of the present application are a wireless communication method and apparatus, and a device and a storage medium. The method comprises: an access point multi-link device (AP MLD) performing, on a first link, frame exchange with a non-access point device, the link mode of the AP MLD comprising a first mode, wherein when the AP MLD is in the first mode, the number of available spatial streams of the first link that are used for receiving or transmission comprises a first number; and when the AP MLD is not in the first mode, the number of available spatial streams of the first link that are used for receiving or transmission comprises a second number, the first number being greater than the second number.

## Description

### TECHNICAL FIELD

Embodiments of the disclosure relate to the technical field of mobile communications, and in particular to a method and apparatus for wireless communication, a device, and a storage medium.

### BACKGROUND

The industry of wireless local area networks (LANs) is one of industries developing fastest currently in the whole data communication field. As a supplement and extension of traditional wired LANs, the wireless LAN solution has been favored by home network users, small and medium-sized office users, enterprise users and telecom operators and has been quickly applied because of advantages such as flexibility, mobility, scalability and low investment cost. Now more and more wireless LANs support a mobile Access Point (AP) function.

An AP multi-link device (MLD) with the mobile AP function has a non-simultaneous transmit and receive (NSTR) link pair. One link in the NSTR link pair serves as a primary link to transmit beacon frames and probe response frames, and the other link serves as a secondary link which does not transmit any beacon frame or probe response frame.

### SUMMARY

Embodiments of the disclosure provide a method and apparatus for wireless communication, a device, and a storage medium.

The method for wireless communication according to an embodiment of the disclosure includes the following.

An access point multi-link device (AP MLD) performs frame exchange with a non-access point device over a first link. A link mode of the AP MLD includes a first mode. When the AP MLD is in the first mode, the first link includes a first number of available spatial streams for reception or transmission. When the AP MLD is not in the first mode, the first link includes a second number of available spatial streams for reception or transmission. The first number is greater than the second number

The method for wireless communication according to an embodiment of the disclosure includes the following.

A non-access point device performs frame exchange with an access point multi-link device (AP MLD) over a first link. A link mode of the AP MLD includes a first mode. When the AP MLD is in the first mode, the first link includes a first number of available spatial streams for reception or transmission. When the AP MLD is not in the first mode, the first link includes a second number of available spatial streams for reception or transmission. The first number is greater than the second number

The apparatus for wireless communication according to an embodiment of the disclosure is applied to an AP MLD, and includes a first communication unit.

The first communication unit is configured to perform frame exchange with a non-access point device over a first link. A link mode of the AP MLD includes a first mode. When the AP MLD is in the first mode, the first link includes a first number of available spatial streams for reception or transmission. When the AP MLD is not in the first mode, the first link includes a second number of available spatial streams for reception or transmission. The first number is greater than the second number.

The apparatus for wireless communication according to an embodiment of the disclosure is applied to a non-access point device, and includes a second communication unit.

The second communication unit is configured to perform frame exchange with an access point multi-link device (AP MLD) over a first link. A link mode of the AP MLD includes a first mode. When the AP MLD is in the first mode, the first link includes a first number of available spatial streams for reception or transmission. When the AP MLD is not in the first mode, the first link includes a second number of available spatial streams for reception or transmission. The first number is greater than the second number.

The communication device according to an embodiment of the disclosure may be the AP MLD in the above solution or the non-access point device in the above solution, which includes a processor and a memory. The memory is configured to store a computer program, and the processor is configured to call and run the computer program stored in the memory to cause the communication device to perform the above method for wireless communication.

The chip according to an embodiment of the disclosure is configured to implement the above method for wireless communication.

Specifically, the chip includes: a processor, configured to call and run a computer program from a memory, causing a device, on which the chip is installed, to perform the above method for wireless communication.

The computer-readable storage medium according to an embodiment of the disclosure is configured to store a computer program, which, when running, causes a computer to perform the above method for wireless communication.

The computer program product according to an embodiment of the disclosure includes computer program instructions, which, when running, cause a computer to perform the above method for wireless communication.

The computer program according to an embodiment of the disclosure, when running on a computer, causes the computer, when running, to perform the above method for wireless communication.

According to the above technical solutions, the first mode of the AP MLD is used to increase the number of available spatial streams of the first link. Therefore, the spatial stream capability of the first link is enhanced, and the transmission efficiency of the AP MLD is improved.

### BRIEF DESCRIPTION OF THE DRAWINGS

The drawings described herein serve for further understanding of the disclosure, and constitute a part of the disclosure. Exemplary embodiments of the disclosure and description thereof are used to explain the disclosure and do not form inappropriate limitation of the disclosure. In the drawings:
FIG. 1 is an optional schematic diagram of an application scenario according to an embodiment of the disclosure.
FIG. 2A is an optional schematic diagram of an application scenario according to an embodiment of the disclosure.
FIG. 2B is an optional schematic diagram of an application scenario according to an embodiment of the disclosure.
FIG. 3 is an optional schematic flowchart of a method for wireless communication according to an embodiment of the disclosure.
FIG. 4 is an optional schematic flowchart of a method for wireless communication according to an embodiment of the disclosure.
FIG. 5 is an optional schematic flowchart of a method for wireless communication according to an embodiment of the disclosure.
FIG. 6A is an optional schematic flowchart of a method for wireless communication according to an embodiment of the disclosure.
FIG. 6B is an optional schematic flowchart of a method for wireless communication according to an embodiment of the disclosure.
FIG. 7 is a schematic diagram of a format of a Presence Bitmap field according to an embodiment of the disclosure.
FIG. 8 is a schematic diagram of a format of a Common Info field according to an embodiment of the disclosure.
FIG. 9 is a schematic diagram of a format of an Enhanced Link (EL) Capabilities field according to an embodiment of the disclosure.
FIG. 10 is a schematic diagram of a coding mode of an EL Padding Delay field according to embodiments of the disclosure.
FIG. 11 is a schematic diagram of a coding mode of an EL Transition Delay field according to an embodiment of the disclosure.
FIG. 12 is a schematic diagram of a format of an Enhanced Multi-Link (EML) Capabilities field according to an embodiment of the disclosure.
FIG. 13 is a schematic diagram of a format of an EML Capabilities field according to an embodiment of the disclosure.
FIG. 14 is a schematic diagram of a format of an Action field of an enhanced link operating mode notification (EL OMN) according to an embodiment of the disclosure.
FIG. 15 is a schematic diagram of a coding mode of a modified Action field of the EL OMN according to an embodiment of the disclosure.
FIG. 16 is a schematic diagram of a format of an EL Control field according to an embodiment of the disclosure.
FIG. 17 is a schematic diagram of a coding mode of an EL Control field according to an embodiment of the disclosure.
FIG. 18 is a schematic diagram of a format of an EML Control field according to an embodiment of the disclosure.
FIG. 19 is a schematic diagram of a format of Control Information according to an embodiment of the disclosure.
FIG. 20 is an optional schematic flowchart of a method for wireless communication according to an embodiment of the disclosure.
FIG. 21 is an optional schematic flowchart of a method for wireless communication according to an embodiment of the disclosure.
FIG. 22 is an optional schematic flowchart of a method for wireless communication according to an embodiment of the disclosure.
FIG. 23 is an optional schematic flowchart of a method for wireless communication according to an embodiment of the disclosure.
FIG. 24 is an optional schematic flowchart of a method for wireless communication according to an embodiment of the disclosure.
FIG. 25 is an optional schematic flowchart of a method for wireless communication according to an embodiment of the disclosure.
FIG. 26 is an optional schematic flowchart of a method for wireless communication according to an embodiment of the disclosure.
FIG. 27 is an optional schematic flowchart of a method for wireless communication according to an embodiment of the disclosure.
FIG. 28A is an optional schematic flowchart of a method for wireless communication according to an embodiment of the disclosure.
FIG. 28B is an optional schematic flowchart of a method for wireless communication according to an embodiment of the disclosure.
FIG. 29 is an optional schematic structural diagram of an apparatus for wireless communication according to an embodiment of the disclosure.
FIG. 30 is an optional schematic structural diagram of an apparatus for wireless communication according to an embodiment of the disclosure.
FIG. 31 is a schematic structural diagram of a communication device according to an embodiment of the disclosure.
FIG. 32 is a schematic structural diagram of a chip according to an embodiment of the disclosure.
FIG. 33 is a schematic block diagram of a communication system according to an embodiment of the disclosure.

### DETAILED DESCRIPTION

The technical solution of embodiments of the disclosure will be described below in conjunction with the accompanying drawings of embodiments of the disclosure. It is apparent that the described embodiments are some rather than all embodiments of the disclosure. All other embodiments obtained by those ordinarily skilled in the art based on embodiments of the disclosure without paying any inventive effort shall fall within the scope of protection of the disclosure.

The technical solution of embodiments of the disclosure can be applied to various communication systems, such as: a Wireless Local Area Network (WLAN), Wireless Fidelity (WiFi), or other communication systems. Frequency bands that the WLAN can support may include, but are not limited to, low frequency bands (2.4 GHz, 5 GHz, and 6 GHz), and high frequency bands (60 GHz).

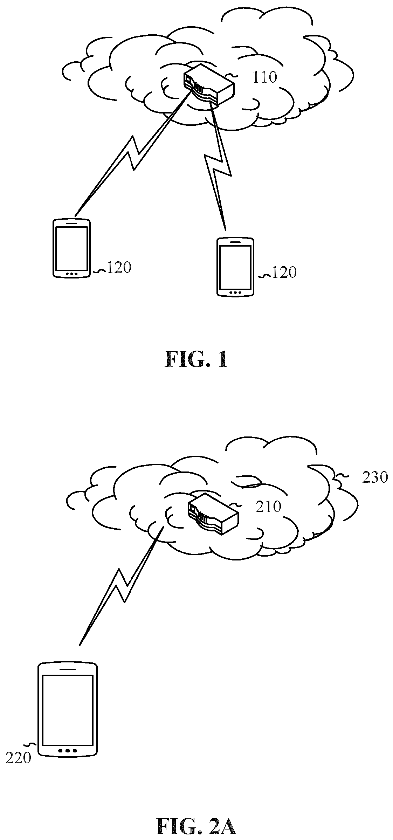

FIG. 1 is an example of a communication system architecture applied by an embodiment of the disclosure.

As illustrated in FIG. 1, a communication system 100 may include an access point (AP) 110, and stations (STAs) 120 accessing a network through the AP 110. In some scenarios, the AP 110 may also be referred to as an AP STA; that is to say, the AP 110 is also a STA in a sense. In some scenarios, the STA 120 may also be referred to as a non-AP STA. In some scenarios, the STAs 120 may include an AP STA and a non-AP STA. Communications in the communication system 100 may include: a communication between the AP 110 and an STA 120, or a communication between one STA 120 and another STA 120, or a communication between an STA 120 and a peer STA. The peer STA may refer to a peer device communicating with the STA 120, for example, the peer STA may be an AP or a non-AP STA.

The AP 110 may be used as a bridge connecting a wired network and a wireless network, and has a main function of connecting various wireless network clients together, and then connect the wireless network to the Ethernet. The AP 110 may be a terminal device (such as a mobile phone) or a network device (such as a router) with a WiFi chip.

It is to be noted that the role of the STA 120 in the communication system is not absolute, that is, the role of the STA 120 in the communication system may switch between an AP and an STA. For example, in some scenarios, when the mobile phone is connected to the router, the mobile phone is an STA; and when the mobile phone serves as a hotspot for another mobile phone, the mobile phone serves as an AP.

In some embodiments, the AP 110 and the STA 120 may be devices applied in the Internet of Vehicles; Internet of things (IoT) nodes, sensors, or the like in the IoT; smart cameras, smart remote controls, smart water meters, smart electric meters or the like in smart homes; and sensors or the like in smart cities.

In some embodiments, the AP 110 may be a device that supports the 802.11be standard. The AP may also be a device that supports various current and future 802.11 family WLAN standard such as 802.11ax, 802.11ac, 802.11n, 802.11g, 802.11b, and 802.11a. In some embodiments, the STA 120 may support the 802.11be standard. The STA may also support various current and future 802.11 family WLAN standards such as 802.11ax, 802.11ac, 802.11n, 802.11g, 802.11b, and 802.11a.

In some embodiments, the AP 110 and/or the STA 120 may be deployed on the land, including being indoor or outdoor, hand-held, wearable or vehicle-mounted; or the AP 110 and/or the STA 120 may be deployed on the water, for example on a ship; or may be deployed in the air, for example on a plane, a balloon, a satellite, or the like.

In some embodiments, the STA 120 may be a mobile phone supporting WLAN/WiFi technologies, a pad, a computer with a radio transceiving function, a virtual reality (VR) terminal device, an augmented reality (AR) device, a radio device used in industrial control, a set-top box, a radio device used in self-driving, a vehicle-mounted communication device, a radio device used in remote medical, a radio device used in smart grid, a radio device used in transportation safety, a radio device used in smart city or a radio device used in smart home, a vehicle-mounted communication device, a wireless communication chip/application specific integrated circuit (ASIC)/System on Chip (SoC) or the like.

Exemplarily, the STA 120 may also be a wearable device. The wearable device may also be referred to as a wearable smart device, which is a generic name of devices that are designed and developed in an intellectualized mode based on daily wear using wearable technologies, for example glasses, gloves, watches, clothes, and shoes. A wearable device is a portable device that is directly worn on a body or integrated into the clothes or accessories of a user. A wearable device is not only a hardware device, but also realizes strong functions through support of software and through data interaction and cloud interaction. Generic wearable smart devices include devices that have plentiful functions and large sizes and can realize all or some functions without depending on a smart phone, for example a smart watch or smart glasses, and also include devices that focus on only some type of application functions and need to be used in cooperation with other devices such a smart phone, for example various smart bracelets and smart jewelry for monitoring physical signs.

It is to be understood that FIG. 1 merely illustrates an example of the disclosure and should not be construed as a limitation of the disclosure. For example, FIG. 1 merely exemplarily illustrates one AP and two STAs. In some embodiments, the communication system 100 may include multiple APs and another number of STAs, which is not limited in embodiments of the disclosure.

FIG. 2A is a schematic diagram of an application scenario according to an embodiment of the disclosure.

As illustrated in FIG. 2A, the communication system 200 may include an AP MLD 210 and a non-AP MLD 220. The AP MLD 210 is an electronic device capable of forming a wireless local area network 230 based on a transmitted signal, such as a router, and a mobile phone having a hotspot function. The non-AP MLD 220 is an electronic device accessing the wireless local area network 230 formed by the AP MLD 210, such as a mobile phone, a smart washing machine, an air conditioner, an electronic lock, and the like. The non-AP MLD 220 communicates with the AP MLD 210 through the wireless local area network 230. The AP MLD 210 may be a soft AP MLD, a mobile AP MLD, or the like.

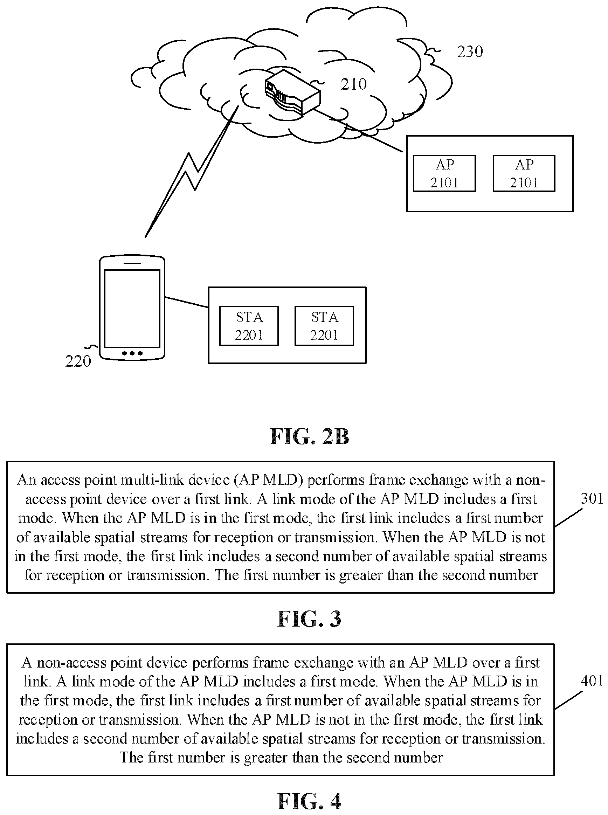

As illustrated in FIG. 2B, in the communication system of FIG. 2A, the AP MLD 210 has at least two affiliated APs 2101, and the non-AP MLD 220 has at least two affiliated stations (STAs) 2201. Each AP is connected to a respective different STA in the non-AP MLD 220 by a respective different link. An AP affiliated with the AP MLD may also be referred to as an affiliated AP of the AP MLD, and an STA affiliated with the non-AP MLD may also be referred to as an affiliated STA of the non-AP MLD.

In embodiments of the disclosure, the AP MLD 210 and the non-AP MLD 220 may be terminal devices. The terminal device may refer to an access terminal, user equipment (UE), a user unit, a user station, a mobile station, a remote station, a remote terminal, a mobile device, a user terminal, a terminal, a wireless communication device, a user agent or a user device. The access terminal may be a cellular phone, a cordless phone, a session initiation protocol (SIP) phone, a wireless local loop (WLL) station, a personal digital assistant (PDA), a hand-held device with a wireless communication function, a computing device or another processing device connected to a radio modem, a vehicle-mounted device, a wearable device, a terminal device in a 5^{th} generation (5G) network, a terminal device in future evolved Public Land Mobile Network (PLMN) or the like.

The communication system 200 as illustrated in FIG. 2A may further include a network device, which may be an access network device communicating with the terminal device. The access network device may provide communication coverage for a specific geographical area, and may communicate with a terminal device within the coverage.

FIG. 2A exemplarily illustrates an AP MLD and a non-AP MLD. In an example, the wireless communication system 200 may include multiple non-AP MLDs connected to the wireless local area network 230, which is not limited in embodiments of the disclosure.

It is to be noted that FIG. 1, FIG. 2A and FIG. 2B merely illustrate a system to which the disclosure is applicable in an exemplary way. Of course, the method illustrated in embodiments of the disclosure may also be applicable to other systems. In additional, the terms "system" and "network" herein are often used interchangeably. The term "and/or" herein merely describes a relationship between associated objects, representing that three relationships may exist. For example A and/or B may represent following three cases: independent existence of A, existence of both A and B, and independent existence of B. In addition, the character "/" herein generally represents that the contextual objects are in an "or" relationship. It is also to be understood that "indicate" referred in embodiments of the disclosure may be a direct indication or an indirect indication, or may refer to that there is an association relationship. By way of example, "A indicates B" may refer to that A directly indicates B, for example, B may be acquired through A. "A indicates B" may also refer to that A indirectly indicates B, for example, A indicates C and B may be acquired through C. "A indicates B" may also refer to that there is an association relationship between A and B. It is also to be understood that "correspond" referred in embodiments of the disclosure may mean that there is a direct correspondence or an indirect correspondence between two objects, or may mean that there is an association relationship between the two object, or may mean a relationship that one object indicates or is indicated by another object or a relationship that one object configures or is configured by another object. It is also to be understood that "predefine" or "predefined rule" referred in embodiments of the disclosure may be realized by prestoring corresponding codes or tables in a device (for example, a terminal device and a network device) or in other ways that can be used to indicate relevant information. The specific implementation is not limited in the disclosure. For example, "predefined" may refer to being defined in a protocol. It is also to be understood that, in embodiments of the disclosure, the "protocol" may refer to standard protocols in the field of communications, for example, LTE protocol, NR protocol or relevant protocols applied in future communication systems, which is not limited in embodiments of the disclosure.

For convenience in understanding the technical solution of embodiments of the disclosure, the relevant technologies of embodiments of the disclosure are described hereinafter. Any combination formed by the relevant technologies below as optional solutions and the technical solutions of embodiments of the disclosure shall fall within the scope of protection of embodiments of the disclosure.

In protocols, a non-simultaneous transmit and receive mobile access point multi-link device (NSTR Mobile AP MLD) is specified. In order to avoid the inter-domain conflict problem of NSTR Mobile AP MLD data transmission, the concept of primary link and non-primary link is specified, and all management frames are required to be transmitted only over the primary link. Moreover, synchronous transmission rules of the NSTR Mobile AP MLD are defined. Data transmission over the non-primary link can only be performed when the primary link is the holder of transmission opportunity (TXOP). Moreover, operations such as start time alignment and deadline synchronization are required to be performed on data frames between the primary link and the non-primary link.

During data transmission of the AP MLD and the non-AP MLD, in addition to utilizing the synchronous transmission rules to solve the problem of inter-domain conflict, an enhanced multi-link (EML) operating mode may also be adopted. Spatial streams on multiple links are transitioned to one operating link and transmitted using spatial diversity or spatial multiplexing, which may increase the transmission efficiency of equipment on the one hand, and avoid the inter-domain conflict in data interaction on the other hand.

Although the synchronous transmission rules may solve the problem of inter-domain conflict of the NSTR Mobile AP MLD, not all the spatial stream resources owned by the NSTR Mobile AP MLD can be fully utilized. For example, when the non-primary link of the NSTR Mobile AP MLD is idle, the data transmission rate of the NSTR Mobile AP MLD is greatly limited by the number of spatial streams owned by the AP on the primary link.

For convenience of understanding the technical solution of embodiments of the disclosure, the technical solution of the disclosure will be described in detail below via specific embodiments. Any combination formed by the above relevant technologies as optional solutions and the technical solutions of embodiments of the disclosure shall fall within the scope of protection of embodiments of the disclosure. Embodiments of the disclosure include at least part of the following content.

An embodiment of the disclosure provides a method for wireless communication, applied to an AP MLD. As illustrated in FIG. 3, the method includes following operations.

At S301, the access point multi-link device (AP MLD) performs frame exchange with a non-access point device over a first link. A link mode of the AP MLD includes a first mode. When the AP MLD is in the first mode, the first link includes a first number of available spatial streams for reception or transmission. When the AP MLD is not in the first mode, the first link includes a second number of available spatial streams for reception or transmission. The first number is greater than the second number.

An embodiment of the disclosure provides a method for wireless communication, applied to a non-access point device. As illustrated in FIG. 4, the method includes following operations.

At S401, the non-access point device performs frame exchange with an AP MLD over a first link. A link mode of the AP MLD includes a first mode. When the AP MLD is in the first mode, the first link includes a first number of available spatial streams for reception or transmission. When the AP MLD is not in the first mode, the first link includes a second number of available spatial streams for reception or transmission. The first number is greater than the second number.

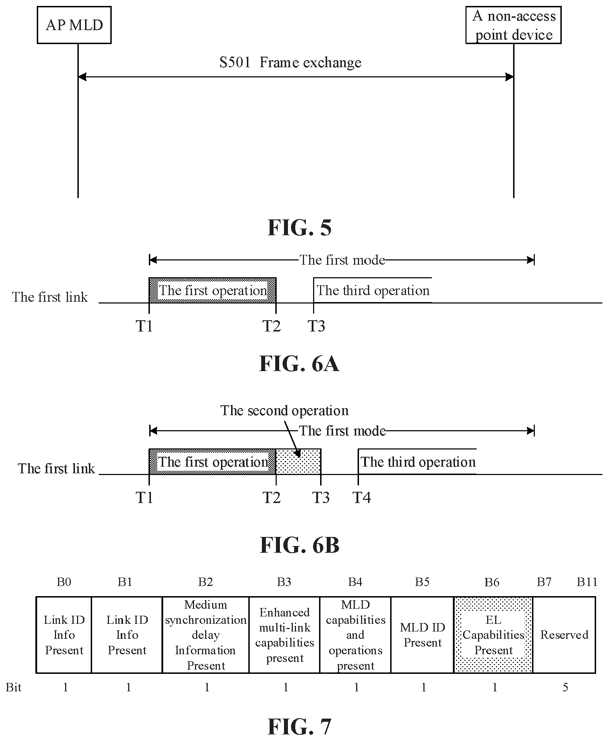

An embodiment of the disclosure provides a method for wireless communication, applied to a wireless communication system including an AP MLD and a non-access point device. As illustrated in FIG. 5, the method includes following operations.

At S501, the AP MLD and the non-access point device perform frame exchange with each other over a first link. A link mode of the AP MLD includes a first mode. When the AP MLD is in the first mode, the first link includes a first number of available spatial streams for reception or transmission. When the AP MLD is not in the first mode, the first link includes a second number of available spatial streams for reception or transmission. The first number is greater than the second number.

Hereinafter, the method for wireless communication illustrated in FIG. 3, FIG. 4, or FIG. 5 according to embodiments of the disclosure will be further described.

The link mode of the AP MLD includes a first mode. The first mode may be understood as an Enhanced Link (EL) operating mode or a link enhancement mode.

If the AP MLD is in the first mode, the first link includes the first number of available spatial streams. If the AP MLD is not in the first mode, the AP MLD is in a mode other than the first mode, and the first link includes the second number of available spatial streams.

In an example, if the AP MLD is not in the first mode, the number of available spatial streams of the first link is M; and if the AP MLD is in the first mode, the number of available spatial streams of the first link includes N, where N is greater than M.

It is understandable that the number of available spatial streams for reception of the AP MLD is independent from the number of available spatial streams for transmission of the AP MLD. In an example, the number of available spatial streams for reception includes the second number when the AP MLD is in the first mode, and the number of available spatial streams for reception is the first number when the AP MLD is not in the first mode. Alternatively, the number of available spatial streams for transmission includes the second number when the AP MLD is in the first mode, and the number of available spatial streams for transmission is the first number when the AP MLD is not in the first mode.

The AP MLD being in the first mode may be understood as the communication between the AP MLD and one or more non-access point devices being in the first mode, and the first link for the communication between the AP MLD and the one or more non-access point devices includes the first number of available spatial streams.

The AP MLD performs frame exchange with the non-access point device by using the first link. The number of spatial streams used by the AP MLD to perform the frame exchange is less than or equal to the number of available spatial streams of the first link. If the first link includes the first number of available spatial streams when the AP MLD performs the frame exchange, the number of spatial streams used by the first link to perform the frame exchange is less than or equal to the first number. If the first link includes the second number of available spatial streams when the AP MLD performs the frame exchange, the number of spatial streams used by the first link to perform the frame exchange is less than or equal to the second number.

The AP MLD performing the frame exchange with the non-access point device may be understood as the AP MLD performing frame interaction with the non-access point device based on the first link. Here, frames involved in the frame exchange process may include a data frame, and may also include other frames such as a management frame.

In an exemplary scenario, the AP MLD transmits a frame to the non-access point device over the first link, and the non-access point device transmits an acknowledgement frame to the AP MLD over the first link after receiving the frame transmitted by the AP MLD. The acknowledgement frame indicates that the non-access point device has received the frame transmitted by the AP MLD. In this case, the frame involved in the frame exchange process is an uplink frame.

In an exemplary scenario, the non-access point device transmits a frame to the AP MLD over the first link, and the AP MLD transmits an acknowledgement frame to the non-access point device over the first link after receiving the transmitted frame. The acknowledgement frame indicates that the AP MLD has received the frame transmitted by the non-access point device.

It is understandable that when the AP MLD is in the first mode, the number of available spatial streams of the first link may also include the second number. If the AP MLD is in the first mode and the number of available spatial streams of the first link is the second number, the number of spatial streams used by the first link to perform the frame exchange is less than or equal to the second number.

In an example, the non-access point device includes a Non-AP MLD or a Non-AP STA.

The Non-AP MLD has at least two affiliated stations (STAs). An STA affiliated with the Non-AP MLD may be referred to as an affiliated STA. If the AP MLD operating in the first mode uses the first link to perform the frame exchange with the Non-AP MLD, the AP MLD uses the first link to perform the frame exchange with an affiliated STA, which uses the first link, in the Non-AP MLD.

In an example, the first link is a primary link and the second link(s) is/are a secondary link(s). In this case, the AP MLD may transition the available spatial streams of the secondary link(s) to the primary link.

In an embodiment of the disclosure, the AP MLD may include, but is not limited to, an NSTR Mobile AP MLD, and the AP MLD includes at least two links. In an example, the AP MLD is an NSTR Mobile AP MLD. The NSTR Mobile AP MLD includes two links, and the two links included in the NSTR Mobile AP MLD constitute an NSTR link pair.

In some embodiments, if the AP MLD is in the first mode, available spatial streams of the first link of the AP MLD include an available spatial stream transitioned from a second link to the first link, and the second link is one of links of the AP MLD other than the first link.

It is understandable that the first link is an enhanced-link (EL) operating link, and other links of the AP MLD (i.e. the second links) are non-EL operating links.

In an example, the available spatial stream(s) of some or all of the second links of the AP MLD may be transitioned to the first link, such that the available spatial streams of the first link include the available spatial stream(s) transitioned from the second links to the first link.

In an example, for one second link, all or some of the available spatial streams of this second link may be transitioned to the first link.

When the AP MLD is in the first mode, an available spatial stream(s) of the second link may be transitioned to the first link. In an example, if the AP MLD is in the first mode, whether the available spatial stream(s) of the second link is/are transitioned to the first link is determined based on the number of available spatial stream(s) of the non-access point device.

Transitioning the available spatial stream(s) of the second link to the first link may be understood as that the available spatial stream(s) for reception or transmission of the second link is transitioned to the first link for frame exchange of the first link.

If an available spatial stream(s) for reception of the second link is/are transitioned to the first link for frame exchange of the first link, the available spatial streams for reception of the first link include the original available spatial streams for reception of the first link *per se* and the available spatial stream(s) for reception of the second link. That is, the available spatial streams for reception of multiple links of the AP MLD are combined, and the combined available spatial streams for reception are applied to the first link.

If an available spatial stream(s) for transmission of the second link is/are transitioned to the first link for frame exchange of the first link, the available spatial streams for transmission of the first link include the original available spatial streams for transmission of the first link *per se* and the available spatial stream(s) for transmission of the second link. That is, the available spatial streams for transmission of multiple links of the AP MLD are combined, and the combined available spatial streams for transmission are applied to the first link.

Taking the available spatial stream(s) of the second link being not transitioned to the first link as an example, the AP MLD has multiple links. Each link has corresponding available spatial streams, and numbers of available spatial streams of different links are independent from each other. The number of available spatial streams of the first link is the second number.

Taking all the available spatial streams of the second link being transitioned to the first link as an example, the AP MLD has multiple links. The first link has corresponding available spatial streams, and the number of corresponding available spatial streams includes the number of all available spatial streams of the second link. The second link has no corresponding available spatial stream.

Taking some of the available spatial streams of the second link being transitioned to the first link as an example, the AP MLD has multiple links. The first link has corresponding available spatial streams, and the number of corresponding available spatial streams includes the number of some of the available spatial streams of the second link. The second link has some available spatial streams.

In an example, the AP MLD includes three links: link 1, link 2, and link 3. Link 1 is the first link, and link 2 and link 3 are different second links. If the available spatial streams of the second links are not transitioned to the first link, the number of available spatial streams for reception of link 1 is 2, the number of available spatial streams for reception of link 2 is 2, and the number of available spatial streams for reception of link 3 is 2. If all the available spatial streams for reception of link 2 and link 3 are transitioned to link 1, the number of available spatial streams for reception of link 1 is 6, and numbers of available spatial streams for reception of link 2 and link 3 are both 0. If some of the available spatial streams for reception of link 2 and link 3 are transitioned to link 1, the number of available spatial streams for reception of link 1 is 4, and the number of available spatial streams for reception of link 2 and link 3 is 1, respectively.

In an example, the available spatial stream(s) of the second link(s) of multiple links of the AP MLD is/are transitioned to the first link, such that the available spatial streams of the first link include the available spatial stream(s) of the second link(s). The number of available spatial streams of the first link increases, the spatial stream capability is enhanced, and the operation efficiency of the first link is improved.

In some embodiments, the AP MLD further performs the following operations.

The AP MLD transmits a first frame indicating that the AP MLD is to start or end the first mode.

At this time, the non-access point device receives the first frame transmitted by the AP MLD, and determines that the AP MLD enters or quits the first mode based on the first frame.

In an embodiment of the disclosure, the first frame is configured to inform the non-access point device associated with the AP MLD that the AP MLD is about to start or end the first mode. If the AP MLD needs to enter or quit the first mode, the AP MLD transmits the first frame to the associated non-access point device to notify the non-access point device associated with the AP MLD to start or end the first mode. The non-access point device associated with the AP MLD receives the first frame, and determines that the AP MLD enters or quits the first mode according to the first frame.

If the first frame indicates that the AP MLD is to start the first mode, the AP MLD enters the first mode based on the transmission of the first frame, and the non-access point device determines that the AP MLD enters the first mode based on the first frame.

If the first frame indicates that the AP MLD is to end the first mode, the AP MLD quits the first mode based on the transmission of the first frame, and the non-access point device determines that the AP MLD quits the first mode based on the first frame.

In some embodiments, the first mode includes: a standalone operating mode and a group operating mode;
In the standalone operating mode, the AP MLD transmits the first frame to the non-access point device, where the first frame indicates that the AP MLD is to start or end the first mode.

In group operating mode, the AP MLD broadcasts the first frame.

In the standalone operating mode, the AP MLD transmits the first frame to a non-access point device over the first link, and only notify this non-access point device to start or end the first mode based on the first frame.

When the AP MLD starts the standalone operating mode, the AP MLD enters the first mode with only one non-access point device. AP MLD transmits the first frame to the non-access point device over the first link, and the non-access point device receives the first frame over the first link.

In the standalone operating mode, the AP MLD notifies a non-access point device over the first link that the AP MLD *per se* is about to start or end the first mode. At this time, the first mode takes effect in the communication between the AP MLD and this non-access point device. The communications between the AP MLD and other non-access point devices other than this non-access point device are not in the first mode.

In the group operating mode, the AP MLD broadcasts the first frame, and multiple non-access point devices associated with the AP MLD detects the first frame.

If the AP MLD starts the group operating mode, the AP MLD notifies the non-access point devices associated with the AP MLD through broadcast that the AP MLD *per se* is about to start the first mode or end the first mode. In the group operating mode, the first mode takes effect in the communications between the AP MLD and all non-access point devices associated with the AP MLD.

In an example, if the operating mode of the first mode is the group operating mode, the method further includes the following operation. The AP MLD enters or quits the first mode after completing transmission of the first frame.

Taking the first frame indicating that the AP MLD is to start the first mode as an example, the AP MLD broadcasts the first frame indicating that the first mode is to be started, and enters the first mode after completing broadcast of the first frame.

Taking the first frame indicating that the AP MLD is to end the first mode as an example, the AP MLD broadcasts the first frame indicating that the first mode is to be ended, and quits the first mode after completing broadcast of the first frame.

In an example, if the operating mode of the first mode is the standalone operating mode, the method further includes the following operation. The AP MLD enters or quits the first mode at a second moment after a first moment, or after completing reception of a second frame. An interval between the second moment and the first moment has a first duration, the first moment is a moment when transmission of the first frame is completed, and the second frame is configured to respond to the first frame.

In an example, the first duration is the longest duration to wait for the second frame after transmitting the first frame.

In the standalone operating mode, the AP MLD transmits the first frame to a non-access point device over the first link, and starts timing after the first moment when transmission of the first frame is completed. After the first duration after completing transmission of the first frame, or after receiving the second frame that is in response to the first frame and transmitted by the non-access point device, the AP MLD enters or quits the first mode.

Taking the first frame indicating that the AP MLD is to start the first mode as an example, the AP MLD transmits the first frame over the first link, the first frame indicating that the first mode is to be started, and the AP MLD enters the first mode at the second moment after completing transmission of the first frame or after completing reception of the second frame.

Taking the first frame indicating that the AP MLD is to end the first mode as an example, the AP MLD transmits the first frame over the first link, the first frame indicating that the first mode is to be ended. The AP MLD quits the first mode at the second moment after completing transmission of the first frame or after completing reception of the second frame.

In an example, the value of the Dialog Token included in the second frame in response to the first frame is the same as the value of the Dialog Token included in the first frame.

In an example, if the first frame indicates that the AP MLD is to start the first mode, the first frame carries first indication information indicating that the AP MLD is to start the first mode.

In an example, if the first frame indicates that the AP MLD is to end the first mode, the first frame carries second indication information indicating that the AP MLD is to end the first mode.

In some embodiments, the first frame further indicates that the operating mode of the AP MLD is the standalone operating mode or the group operating mode.

In an example, the first frame carries third indication information, and the third indication information indicates that the operating mode of the AP MLD is the standalone operating mode.

In an example, the first frame carries fourth indication information, and the fourth indication information indicates that the operating mode of the AP MLD is the group operating mode.

In some embodiments, the first frame includes a first identifier, the first identifier having a first value is the first indication information indicating that the AP MLD is to start the first mode. The first identifier having a second value is the second indication information indicating that the AP MLD is to end the first mode.

The first identifier is a bit(s) that indicate(s) that the AP MLD is to start or end the first mode, and the first identifier may include one or more bits.

It is understandable that the first value and the second value are different values. Taking the first identifier including 1 bit as an example, the first value is 1 and the second value is 0; or, the first value is 0 and the second value is 1.

In some embodiments, the first frame includes a second identifier, the second identifier having a third value is third indication information indicating that the operating mode of the first mode is the standalone operating mode. The second identifier having a fourth value is fourth indication information indicating that the operating mode of the first mode is the group operating mode.

The second identifier is a bit(s) indicating the operating mode of the AP MLD, and the second identifier may include one or more bits.

It is understandable that the third value and the fourth value are different values. Taking the second identifier including 1 bit as an example, the third value is 1 and the fourth value is 0; or, the third value is 0 and the fourth value is 1.

In an example, the first frame includes a third identifier indicating the first link.

The third identifier is a bit indicating the first link, and the third identifier may include one or more bits.

In the case where the third identifier includes multiple bits, different bits correspond to different links, and the link corresponding to the bit with a set value is the first link. It is understandable that the number of bits included in the third identifier may be greater than or equal to the number of links of the AP MLD.

In some embodiments, the first frame is a set frame or an enhanced multi-link operating mode notification (EML OMN) frame.

For the set frame,
if the first frame is a set frame, i.e. a newly established frame, the first frame may be referred to as an enhanced link operating mode notification (EL OMN) frame.

In an example, if the first frame is a set frame, the action domain of the set frame includes the first identifier indicating that the AP MLD is to start or end the first mode.

In an example, the action domain of the set frame includes at least one of the following fields: a category field, an action field, or an enhanced-link control field. The first identifier is in the enhanced-link control (EL control) field.

The category field indicates the category of the set frame.

The action field may be understood as a protected EHT action field indicating whether the frame is used for operating mode indication. When the value of the action field is the set value, the action field indicates that the frame is used for operating mode indication.

The EL control field includes the first identifier.

In an example, the enhanced-link control field further includes the second identifier indicating the operating mode of the AP MLD.

In an example, the enhanced-link control field further includes the third identifier indicating the first link.

In an example, the EL control field includes 18 bits, the 0th bit is the second identifier indicating that the operating mode of the AP MLD is the group operating mode or the standalone operating mode, the 1st bit is the first identifier indicating that the first mode is to be started or ended, and the 2nd to 17th bits are the third identifier indicating the first link.

For the EML OMN frame,
if the first frame is an EML OMN frame, the EML OMN frame is reused, and some of the attribute fields of the EML OMN frame are modified to obtain the first frame.

In an example, if the first frame is an EML OMN frame, the reserved field of the EML OMN frame includes the first identifier, which indicates that the AP MLD is to start or end the first mode.

In an example, the reserved field of the EML OMN frame further includes the second identifier indicating the operating mode of the first mode.

If the 18th to 23rd bits of the EML OMN frame are the reserved field, then one of the 18th to 23rd bits of the EML OMN frame may be reused as the first identifier, and one of the 18th to 23rd bits of the EML OMN frame other than the first identifier may be reused as the second identifier.

In an example, the EML OMN frame further includes the third identifier indicating the first link.

The third identifier may be in bit(s) of the reserved field of the EML OMN frame, other than the first identifier and the second identifier, or it may be a newly added field in the EML OMN frame.

If the third identifier is a newly added field in the EML OMN frame, the third identifier may be at any position in the EML OMN frame. In an example, the third identifier may be at the end of the EML OMN frame.

In some embodiments, the first mode includes the following operations.

In the first operation, the first link and the second link(s) of the AP MLD are in a listening state, and the second link(s) is/are the link(s) of the AP MLD other than the first link.

In the second operation, the frame exchange is performed over the first link using a number of spatial stream(s) less than or equal to the second number, and the second link(s) has/have an available spatial stream(s) and support(s) the frame exchange.

In the third operation, the frame exchange is performed over the first link by using a number of spatial streams greater than the second number and less than or equal to the first number, and the second link(s) does/do not support the frame exchange.

It is understandable that the AP MLD performs the frame exchange with the non-access point device over the first link in the second operation or the third operation of the first mode.

For the first operation, the AP MLD does not perform the frame exchange with the non-access point device, but listens on the first link and the second link to detect whether the frame exchange is needed.

For the second operation, the AP MLD performs the frame exchange with the non-access point device, and both the first link and the second link support the frame exchange. Both the first link and the second link have an available spatial stream(s), and the available spatial stream(s) of the first link do(es) not include the available spatial stream(s) of the second link. Therefore, the first link has the second number of available spatial streams, and the frame exchange is performed over the first link by using a number of spatial stream(s) less than or equal to the second number.

For the third operation, the AP MLD performs the frame exchange with the non-access point device, and the first link supports the frame exchange. The available spatial stream(s) of the first link include the available spatial stream(s) of the second link. Therefore, the first link has the first number of available spatial streams. The frame exchange is performed over the first link by using a number of spatial stream(s) less than or equal to the first number; and the second link does not support the frame exchange. In an example, there is no available spatial stream in the second link.

In an example, the AP MLD enters the first operation after starting the first mode.

After starting the first mode, the AP MLD first enters the first operation in the first mode to listen whether the frame exchange is needed in the first operation. When the frame exchange is needed, the AP MLD performs the frame exchange in the second operation or the third operation, and quits the second operation or the third operation after the frame exchange is completed.

In an embodiment of the disclosure, the AP MLD performs transitions between the first operation, the second operation, and the third operation in the following two scenarios:
The first scenario: the frame exchange starts.
The second scenario: the frame exchange ends.
The first scenario
   In the first scenario, the AP MLD in the first mode transitions from the first operation to the second operation or the third operation to perform the frame exchange.

In an example, the AP MLD transitions from the first operation or the second operation to the third operation.

When it is detected in the first operation that the frame exchange is needed, the AP MLD enters the second operation or transitions to the third operation, and performs the frame exchange in the second operation or the third operation.

In an embodiment of the disclosure, when the AP MLD needs to perform the frame exchange, it may enter the second operation and perform the frame exchange in the second operation. Here the AP MLD enters the second operation from the first operation. When AP MLD needs to perform the frame exchange, it may transition to the third operation and perform the frame exchange in the third operation. Here the AP MLD may first enter the second operation from the first operation and then transition from the second operation to the third operation, or may directly transition from the first operation to the third operation. If the AP MLD first enters the second operation from the first operation and then transitions from the second operation to the third operation, after entering the second operation, the AP MLD performs the frame exchange in the second operation while transitioning the available spatial stream(s) of the second link(s) to the first link to transition from the second operation to the third operation. After completing the transition of the available spatial streams, the AP MLD completes the transition to the third operation and performs the frame exchange in the third operation.

The AP MLD does not need to transition the available spatial stream(s) of the second link(s) to the first link when entering the second operation from the first operation. The transition of the AP MLD from the first operation or the second operation to the third operation needs to transition the available spatial stream(s) of the second link(s) to the first link, so that the first link has the first number of available spatial streams.

As shown in FIG. 6A, when entering the first mode at time T1, the AP MLD enters the first operation at time T1 to perform listening. When it is detected at time T2 that the frame exchange is needed, the AP MLD transitions to the third operation at time T2, and completes the transition to the third operation at time T3.

As shown in FIG. 6B, when entering the first mode at time T1, the AP MLD enters the first operation at time T1 to perform listening. When it is detected at time T2 that the frame exchange is needed, the AP MLD enters the second operation at time T2, transitions to the third operation at time T3, and completes the transition to the third operation at time T4.

In an example, if the number of available spatial streams supported by the non-access point device is less than or equal to the second number, the AP MLD enters the second operation from the first operation.

In the case where the number of available spatial streams supported by the non-access point device is less than or equal to the second number, the number of spatial streams used for the frame exchange between the AP MLD and the non-access point device is less than or equal to the second number, and the number of available spatial streams of the first link of the AP MLD does not need to be increased, then the AP MLD enters the second operation and performs the frame exchange in the second operation.

In an example, if the number of available spatial streams supported by the non-access point device is greater than the second number, the AP MLD enters the second operation from the first operation and transitions from the second operation to the third operation, or, transitions from the first operation to the third operation.

In the case where the number of available spatial streams supported by the non-access point device is greater than the second number, the number of spatial streams used for the frame exchange between the AP MLD and the non-access point device may be greater than the second number and less than or equal to the first number, and the AP MLD increases the number of available spatial streams of the first link, then the AP MLD transitions from the first operation or the second operation to the third operation and performs the frame exchange in the third operation.

In an embodiment of the disclosure, the AP MLD determines whether to enter the second operation or transition to the third operation based on the number of available spatial streams supported by the non-access point device. If the number of available spatial streams supported by the non-access point device is less than or equal to the second number, that is, the number of available spatial streams of the first link which is not in the enhanced mode, there is no need to perform transition of the available spatial streams, and AP MLD enters the second operation. If the number of available spatial streams supported by the non-access point device is greater than the second number, a transition of available spatial streams may be performed to enhance the spatial stream capabilities of the first link. The AP MLD transitions to the third operation, thereby increasing the number of available spatial streams of the first link and improving transmission capacity of the first link.

In an example, the duration for the AP MLD to transition from the first operation or the second operation to the third operation is less than or equal to the second duration. The second duration may be understood as a minimum duration needed for the AP MLD to transition the available spatial stream(s) of the second link(s) to the first link, which may be identified as EL Padding Delay.

In the operation transition process shown in FIG. 6A, the interval between time T2 and time T3 is greater than or equal to the second duration.

In the operation transition process shown in FIG. 6B, the interval between time T3 and time T4 is greater than or equal to the second duration.

In an example, the trigger opportunity for the AP MLD to transition to the third operation includes at least one of the following.

Trigger opportunity A1: the AP MLD obtains a transmission opportunity of the first link, and the transmission opportunity is used for transmitting a data frame.

Trigger opportunity A2: the AP MLD receives a data frame satisfying a first rule over the first link.

Trigger opportunity A3: the AP MLD receives a third frame over the first link, and the third frame is configured to request transmitting a data frame to the AP MLD.

Here, it may be understood that, trigger opportunities A1 to A3 means that the AP MLD determines that there is a trigger condition in which available spatial stream transition is needed. Trigger opportunity A1 is applicable to a scenario where the AP MLD transmits a downlink data frame to the non-access point device; and trigger opportunity A2 and trigger opportunity A3 are applicable to a scenario where the non-access point device transmits an uplink data frame to the AP MLD.

In an example, trigger opportunity A1 is applicable to the standalone operating mode or the group operating mode, trigger opportunity A2 is applicable to the standalone operating mode, and trigger opportunity A3 is applicable to the standalone operating mode.

For trigger opportunity A1, the AP MLD obtains a transmission opportunity and determines that the frame exchange is needed. The AP MLD obtains a transmission opportunity in the first operation, and based on obtaining of the transmission opportunity, transitions from the first operation to the third operation to transmit a data frame based on the obtained transmission opportunity in the third operation.

In an example, after obtaining the transmission opportunity of the first link, the AP MLD protects wireless resources of the first link for a duration greater than or equal to the second duration, so that during the process that the AP MLD transitions from the first operation to the third operation, the wireless resources of the first link are protected.

The protection manners for the AP MLD to protect the wireless resources of the first link includes at least one of the following:
The first protection manner: the AP MLD transmits a fourth frame over the first link, and the fourth frame indicates that a network allocation vector NAV of the first link is a third duration. The third duration is greater than or equal to the second duration, and the second duration is the duration needed for the AP MLD to transition from the first operation or the second operation to the third operation;
The second protection manner: the AP MLD transmits at least one fifth frame to the non-access point device over the first link. A transmission duration of the at least one fifth frame is greater than or equal to the second duration, and the second duration is the duration needed for the AP MLD to transition from the first operation or the second operation to the third operation.

For the first protection manner,
the non-access point device receives a fourth frame from the AP MLD over the first link, and the fourth frame indicates that the network allocation vector NAV of the first link is the third duration. The third duration is greater than or equal to the second duration, and the second duration is the duration needed for the AP MLD to transition from the first operation or the second operation to the third operation.

The AP MLD avoids the wireless resources of the first link from being used by other devices by setting the NAV of the first link. The duration of the NAV indicated in the fourth frame is the third duration, and the third duration is greater than or equal to the second duration. Therefore, the wireless resources of the first link would not be used by other devices during the process that the AP MLD transitions from the first operation or the second operation to the third operation.

In an example, the fourth frame is a Request To Send (RTS) frame.

For the second protection manner,
the non-access point device receives at least one fifth frame from the AP MLD over the first link. The transmission duration of the at least one fifth frame is greater than or equal to the second duration, and the second duration is the duration needed for the AP MLD to transition from the first operation or the second operation to the third operation.

The AP MLD occupies the wireless resources of the first link by transmitting the at least one fifth frame, so that the wireless resources of the first link would not be used by other devices. Here, the transmission duration of the at least one fifth frame is greater than or equal to the second duration, so that the wireless resources of the first link would not be used by other devices during the second duration.

In an example, the fifth frame includes at least one of the following:
Null Data Packet Announcement (NDPA) and Neighbor Discovery Protocols (NDP);
A clear to send to self (CTS to self) frame;
A quality of service-null (QoS-null) frame; or
A data frame.

For trigger opportunity A2, the AP MLD receives data satisfying the first rule over the first link, then the AP MLD determines to transition to the third operation. Here, trigger opportunity A2 may be understood as an implicit manner of starting the third operation by using the transmission rule.

When a non-access point device transmits a data frame, the non-access point device transmits the data frame to the AP MLD based on the first rule. The AP MLD receives the data frame transmitted by the non-access point over the first link, parses the received data frame, determines that the received data frame satisfies the first rule, and then starts the transition to the third operation.

It is understandable that the AP MLD receives the data frame satisfying the first rule over the first link in the second operation, that is, when transmitting the data frame satisfying the first rule over the first link, the number of available spatial streams is the second number, and the AP MLD uses a number of spatial streams less than or equal to the second number to receive the data frame satisfying the first rule.

In an example, the first rule includes at least one of the following:
a set frame format or a set transmission rate.

The set frame format includes at least one of the following: a non-high throughput (non-HT) presentation protocol data unit (PPDU) format, or a non-HT duplicate PPDU format.

The set transmission rate includes at least one of the following: 6Mbps, 12Mbps, or 24Mbps.

For trigger opportunity A3, the third frame may be understood as a trigger frame that triggers the transition to the third operation, and trigger opportunity A3 may be understood as an explicit manner of starting the third operation by using the trigger frame.

The non-access point device needs to transmit a data frame to the AP MLD and transmit the third frame to the AP MLD to request the transmission of the data frame. When the AP receives the third frame transmitted by the non-access point device, the AP transitions from the first operation to the third operation. After the transition to the third operation, the AP receives the data frame transmitted by the non-access point device over the first link.

In an example, the third frame is a control frame.

In an example, the third frame includes fifth indication information, which is configured to request transmitting a data frame to the AP MLD.

In an example, the third frame includes an A-Control field, which includes a control identification (ID) field and a control information field. When the control ID field has a fifth value, the control information field includes the first field, and the fifth indication information is the first field having a sixth value.

Here, the first field, i.e., EL Request Control field, is added to the A-Control field. When the control ID field in the A-Control field has the fifth value, the control information field in the A-Control field includes the first field.

In an example, the control information field of the A-Control field includes two bits, the first bit is the first field and the second bit is a reserved bit. When the first field has the sixth value, the first field indicates the fifth indication information.

In an example, the sixth value is 1.

The second scenario
In the second scenario, the AP MLD ends the frame exchange, enters the first operation from the second operation or transitions from the third operation to the first operation, releases the combined available spatial streams, and returns to the listening state.

In some embodiments, the AP MLD transitions from the third operation to the first operation.

When the AP MLD transitions from the third operation to the first operation, the AP MLD transitions the available spatial stream(s) of the second link(s) included in the available spatial streams of the first link back to the second link(s), and releases the combined available spatial streams, so that the number of available spatial streams of the first link is changed from the first number to the second number.

In an example, the duration for the AP MLD to transition from the third operation to the first operation is less than or equal to the fourth duration.

The fourth duration may be understood as the duration needed for the AP MLD to transition the available spatial stream(s) of the second link(s) included in the available spatial streams of the first link back to the second link(s), and can be identified as the EL Transition Delay.

In an example, the trigger opportunity for the AP MLD to transition to the first operation includes at least one of the following.

Trigger opportunity B1: the AP MLD actively completes transmission of the data frame.

Trigger opportunity B2: a media access control (MAC) layer of the AP MLD receives no sixth indication information from a physical layer of the AP MLD within a fifth duration after the AP MLD receives the data frame, if no instant response to the data frame received by the AP MLD is required. The sixth indication information indicates that a first acknowledgement frame is received, the first acknowledgement frame is configured to respond to the transmitted data frame, and the fifth duration is a duration needed for receiving the first acknowledgement frame.

Trigger opportunity B3: the MAC layer of the AP MLD receives no sixth indication information within the fifth duration after the AP MLD completes transmission of the first acknowledgement frame, if an instant response to the data frame received by the AP MLD is required.

Trigger opportunity B4: the AP MLD transmits no first acknowledgement frame within a short inter-frame space (SIFS), if an instant response to the data frame received by the AP MLD is required.

Here, trigger opportunities B1 to B4 may be understood as the opportunities at which the AP MLD determines the completion of the frame exchange. Trigger opportunity B1 is applicable to a scenario where the AP MLD transmits a downlink data frame to the non-access point device; and trigger opportunity B2 to trigger opportunity B4 are applicable to a scenario where the non-access point device transmits an uplink data frame to the AP MLD.

In an example, trigger opportunity B1 may be applied to the standalone operating mode or the group operating mode, and trigger opportunities B2 to B4 may be applied to the standalone operating mode.

When the AP MLD determines that the frame exchange is ended at the above trigger opportunities, the AP MLD transitions from the third operation to the first operation.

For trigger opportunity B1, when the AP MLD ends the downlink data frame transmission with the non-access point device, the AP MLD may perform the transition of available spatial stream(s) immediately to transition from the third operation to the first operation.

For trigger opportunity B2, if the data frame previously received by the AP MLD from the non-access point device does not require an instant response, the reception completion time of the data frame is used as a starting time point. Starting from the starting time point, if the MAC layer of the AP receives no sixth indication information within the fifth duration, the AP MLD determines that the frame exchange is ended and transitions from the third operation to the first operation.

The fifth duration is the specified time for receiving the first acknowledgement frame. If the MAC layer of the AP receives no sixth indication information within this specified time, it indicates that an error may occur during the frame exchange process.

In an example, the fifth duration is aSIFSTime + aSlotTime + aRxPHYStartDelay.

In an example, the sixth indication information includes the service primitive start receiving indication (PHY-RXSTART.indication) transmitted from the physical layer to the MAC layer.

For trigger opportunity B3, if no instant response to the data frame previously received by the AP MLD from the non-access point device is required, the transmission completion time in response to the data frame is used as a starting time point. Starting from the starting time point, if the MAC layer of the AP MLD receives no sixth indication information within the fifth duration, the AP MLD determines that the frame exchange is ended and transitions from the third operation to the first operation.

For trigger opportunity B4, if an instant response to the data frame previously received by the AP MLD from the non-access point device is required, and the AP MLD does not return the first acknowledgement frame to the non-access point device within one SIFS, then the AP MLD determines that the frame exchange is ended and transitions from the third operation to the first operation.

In some embodiments, after establishing a link with the non-access point device, the AP MLD interacts with the non-access point device in terms of capabilities. The AP MLD notifies the non-access point device of capabilities of the AP MLD and/or the non-access point device reports the capabilities of the non-access point device to the AP MLD.

In an example, the AP MLD transmits the sixth frame to the non-access point device. The sixth frame includes seventh indication information indicating that the AP MLD supports the first mode.

At this time, the non-access point device receives the sixth frame transmitted by the AP MLD. The sixth frame includes the seventh indication information indicating that the AP MLD supports the first mode.

For the non-access point device, the seventh indication information indicates that the non-access point device supports the AP MLD to start the first mode.

In an example, the sixth frame is a management frame.

In an example, the seventh indication information is in a second field of the sixth frame, the second field is in a basic multi-link element and is a set field or an enhanced multi-link (EML) capabilities field.

The second field is a field indicating whether the AP MLD supports the first mode, and may be identified as an EL Support field.

The second field being the set field may be understood as that the second field is a newly added field in the basic multi-link element.

The second field being the EML capabilities field may be understood as that an EML capabilities field in the basic multi-link element is reused to indicate whether the AP MLD has the first mode, that is, a enhanced link capability.

In an example, the second field further includes at least one of the following information:
a second duration, which is a duration needed for the AP MLD to transition from the first operation or the second operation of the first mode to the third operation of the first mode;
a fourth duration, which is a duration needed for the AP MLD to transition from the third operation to the first operation; or
a first duration, which is a valid duration of the first frame transmitted by the AP MLD, and the first frame indicates that the AP MLD is to start or end the first mode.

Taking the second field being the set field as an example, if a third field set in the basic multi-link element has a seventh value, then the basic multi-link element includes the set field, and the third field indicates whether the basic multi-link element includes the set field.

In an example, the third field is a Presence Bitmap subfield. When the third field has the seventh value, the basic multi-link element includes a newly added field indicating whether the AP MLD supports the first mode. It is understandable that if the third field has a value other than the seventh value, then the basic multi-link element does not include the set field.

In an example, the set field includes a first sub-field and at least one of the following sub-fields: a second sub-field, a third sub-field, or a fourth sub-field. The first sub-field indicates the seventh indication information, the second sub-field indicates the second duration, the third sub-field indicates the fourth duration, and the fourth sub-field indicates the first duration.

Taking the second field being the EML capabilities field as an example, if an EML capabilities present field in the basic multi-link element has the eighth value, then the basic multi-link element includes the EML capabilities field.

It is understandable that if the EML capabilities present field has a value other than the eighth value, then the basic multi-link element does not include the EML capabilities field.

In an example, the second field is an EML capabilities field, and the seventh indication information is in a fourth field of the EML capabilities field. The fourth field is an enhanced multi-link single radio (EML SR) support field or a reserved field in the EML capabilities field.

In an embodiment of the disclosure, the EML SR support field in the EML capabilities field may be reused to indicate whether the AP MLD supports the first mode, and the reserved field in the EML capabilities field may also be used to indicate whether the AP MLD supports the first mode.

If a second capability indicates the second duration, the manner for the EML capabilities field to indicate the second duration is: an EMLSR Padding Delay field in the EML capabilities field indicating the second duration, where the second duration is a duration needed for the AP MLD to transition from the first operation or the second operation of the first mode to the third operation of the first mode.

Here, the EMLSR Padding Delay field in the EML capabilities field is reused to indicate the second duration.

If the second capability indicates the fourth duration, the manner for the EML capabilities field to indicate the fourth duration is: an EMLSR Transition Delay field in a second EML capabilities field indicating the fourth duration, where the fourth duration is a duration needed for the AP MLD to transition from the third operation of the first mode to the first operation of the first mode.

Here, the EMLSR Transition Delay field in the EML capabilities field is reconfigured to indicate the fourth duration.

If the second capability indicates the first duration, the manner for the EML capabilities field to indicate the first duration is: a Transition Timeout field in the second EML capabilities field indicating the first duration, where the first duration is a valid duration of the first frame transmitted by the AP MLD, and the first frame indicates that the AP MLD is to start or end the first mode.

Here, the Transition Timeout field in the EML capabilities field is reused to indicate the first duration.

The method for wireless communication according to embodiments of the disclosure will be further explained below.

The method for wireless communication according to embodiments of the disclosure utilizes the method of transitioning spatial streams in the enhanced multi-link mode. In the operation scenario of NSTR Mobile AP MLD, a point-to-point enhanced link operating mode for NSTR Mobile AP MLD is designed, spatial streams of non-operating links are transitioned to the operating link to enhance the spatial stream capability of the NSTR Mobile AP MLD operating link. This solution not only avoids inter domain conflicts in NSTR Mobile AP MLD, but also improves the spatial stream capability transmission efficiency on the operating link of the NSTR Mobile AP MLD, fully utilizing all the capability resources of NSTR Mobile AP MLD.

Definition and explanation of the enhanced link operating mode for NSTR Mobile AP MLD

For the NSTR mobile AP MLD with the enhanced link capability, on the one hand, the NSTR mobile AP MLD may interact with the non-AP MLD or the non-AP STA through broadcast and start a point-to-multipoint operating mode; on the other hand, the NSTR mobile AP MLD may interact with the non-AP MLD or the non-AP STA through unicast and start a point-to-point operating mode. The above operating modes are collectively referred to as NSTR mobile AP MLD Enhanced Link (EL) mode, i.e. the enhanced link operating mode or the EL operating mode.

After starting the enhanced link operating mode, the NSTR mobile AP MLD may transition spatial streams from non EL operating links to the EL operating link, enhancing the spatial stream capability of the EL operating link and improving transmission efficiency.

The following is an explanation of the enhanced link operating mode for the NSTR Mobile AP MLD.

After the NSTR mobile AP MLD and the non-AP MLD or the non-AP STA starts the enhanced link operating mode, the NSTR mobile AP MLD sets a link of the NSTR mobile AP MLD associated with the non-AP MLD or the non-AP STA as an EL operating link, and sets other links as non EL operating links. By default, the primary link established between the non-AP MLD or the non-AP STA and the NSTR mobile AP MLD is used as the EL operating link, and links of the NSTR mobile AP MLD other than the EL operating link are used as non EL operating links. During the data frame interaction in the EL operating mode, the NSTR mobile AP MLD should transition the spatial streams of the non EL operating links to the EL operating link. The EL data frame interaction between the NSTR mobile AP MLD and the non-AP MLD or the non-AP STA should only be performed over the EL operating link.

The enhanced link operating mode of the NSTR mobile AP MLD has two operating modes, namely the group operating mode and the standalone operating mode.

When the NSTR mobile AP MLD starts the group operating mode, the NSTR mobile AP MLD notifies the non-AP MLD or the non-AP STA associated with the NSTR mobile AP MLD through broadcast that the NSTR mobile AP MLD is about to enter the enhanced link operating mode. After the NSTR mobile AP MLD enters the group operating mode, the enhanced link operating mode takes effect in the communications between the NSTR mobile AP MLD and all non-AP MLDs or non-AP STAs.

When the NSTR mobile AP MLD starts the standalone operating mode, the NSTR mobile AP MLD only notifies a certain non-AP MLD or non-AP STA that it is about to enter the enhanced link operating mode. When the NSTR mobile AP MLD notifies an associated non-AP MLD or non-AP STA to start the enhanced link operating mode, the enhanced link operating mode only takes effect in the communication between the NSTR mobile AP MLD and this non-AP MLD or non-AP STA. The communications between the NSTR mobile AP MLD and other non-AP MLDs or non-AP STAs that have not started the enhanced link operating mode are in a non enhanced link operating mode.

After the NSTR mobile AP MLD with the enhanced link capability enters the enhanced link operating mode, the communication between the NSTR mobile AP MLD and the non-AP MLD or the non-AP STA will default to be in an initial operating state.

Before starting the enhanced link operating mode, the NSTR mobile AP MLD should execute a procedure for starting the enhanced link operating mode. Before the NSTR mobile AP MLD desires to end the enhanced link operating mode, the NSTR mobile AP MLD executes a procedure of ending the enhanced link operating mode.

There may be two operating states in the enhanced link operating mode of the NSTR mobile AP MLD, namely the initial operating state and the enhanced operating state.

The initial operating state is the first operation. Each link of the NSTR mobile AP MLD performs data communication according to its original spatial stream capability and corresponding operating mode. The NSTR mobile AP MLD uses synchronous transmission rules between the primary link and non primary links in the initial operating state by default.

The enhanced operating state is the third operation. The NSTR mobile AP MLD transitions spatial streams from non EL operating links to the EL operating link. The data communication between the NSTR mobile AP MLD and the non-AP MLD or the non-AP STA is completed over the EL operating link, and is performed according to the current spatial stream capability and the corresponding operating mode of the EL operating link. During the data communication between the NSTR mobile AP MLD and the non-AP MLD or the non-AP STA, the NSTR mobile AP MLD does not perform any data transmission over the non EL operating links.

After the NSTR mobile AP MLD enters the enhanced link operating mode, the NSTR mobile AP MLD is in the initial operating state. When the NSTR mobile AP MLD prepares to transmit or receive enhanced link data frames, the NSTR mobile AP MLD transitions from the initial operating state to the enhanced operating state. When the NSTR mobile AP MLD ends transmission or reception of an enhanced link data frame sequence, the NSTR mobile AP MLD transitions from the enhanced operating state to the initial operating state.

Information indication of enhanced link capability for the NSTR mobile AP MLD

The first indication manner: a newly added capabilities information subfield

A new capabilities subfield is added to common information (Common Info) of the basic multi-link element: a mobile access point multi-link device capabilities subfield (mobile AP MLD EL Capabilities subfield), i.e. an EL Capabilities subfield, represents the supported capabilities of the current device for the enhanced link operating mode of the NSTR mobile AP MLD through the added capabilities subfield.

A mobile access point multi-link device capability present (mobile AP MLD EL Capabilities Present) subfield is added to a Presence Bitmap subfield in the basic multi-link element. When the value of the subfield is 1, the device may perform relevant operations of the enhanced link operating mode of the NSTR mobile AP MLD, and there is a corresponding "mobile AP MLD EL Capabilities subfield". When the value of the subfield is 0, the device cannot perform relevant operations of the enhanced link operating mode of the NSTR mobile AP MLD, and there is no "mobile AP MLD EL Capabilities subfield".

The NSTR mobile AP MLD, and the non-AP MLD or the non-AP STA that support the enhanced link operating mode need to set the mobile AP MLD EL Capabilities Present in the basic multi-link element of the management frame to 1, and set an EL Support subfield in the mobile AP MLD EL Capabilities subfield to 1. Other attribute subfields of the mobile AP MLD EL Capabilities subfield are set according to their own capability conditions.

The format of the modified Presence Bitmap subfield is shown in FIG. 7. Bit (B) 0 is a link identifier information present (Link ID Info Present) field, B1 is a basic service set parameter change count present (BSS parameter change count Present) field, B2 is a medium synchronization delay Information Present field, B3 is an enhanced multi-link capabilities present (EML capabilities present) field, B4 is an MLD capabilities and operations present field, B5 is an MLD ID Present field, B6 is a mobile AP MLD EL Capabilities Present field, and B7 is a reserved field.

In FIG. 7, the Link ID Info Present field indicates whether the Link ID Info field exists in Common Info. The BSS Parameters Change Count Present field indicates whether the BSS Parameters Change Count field exists in Common Info. The Medium Synchronization Delay Information Present field indicates whether the Medium Synchronization Delay Information field exists in Common Info. The EML Capabilities Present field indicates whether the EML Capabilities field exists in Common Info. The MLD Capabilities and Operations Present field indicates whether the MLD Capabilities and Operations field exists in Common Info. The MLD ID Present field indicates whether the MLD ID field exists in Common Info.

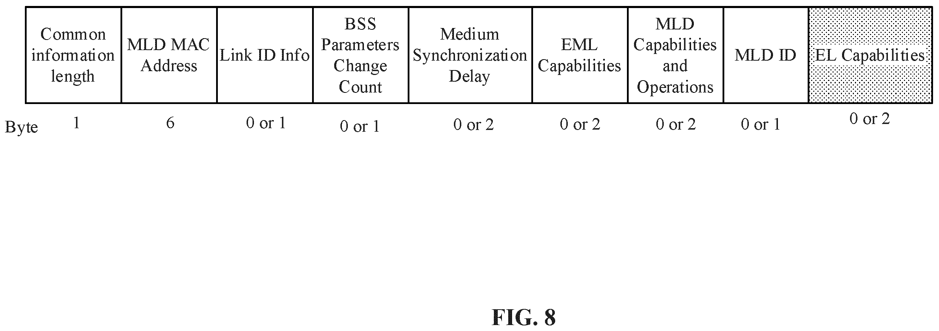

The format of the modified Common Info of the basic multi-link element is shown in FIG. 8. A common information length (Common Info Length) field occupies 1 byte and indicates the length of Common Info in bytes. An MLD MAC Address field occupies 6 bytes and indicates the MAC address of the non-access point device that transmits the current basic multi-link element. The link identifier information (Link ID Info) field occupies 0 or 1 byte, indicates information of which link is described by the current basic multi-link element, and is transmitted by the NSTR mobile AP MLD. The BSS Parameters Change Count field occupies 0 or 1 byte, the numerical value of the BSS Parameters Change Count field is changed according to the operation of the NSTR mobile AP MLD. The medium synchronization delay (Medium Synchronization Delay Information) field occupies 0 or 2 bytes, indicates the delay time needed for medium synchronization operations, and is transmitted by the NSTR mobile AP MLD. The EML Capabilities field occupies 0 or 2 bytes and is configured to declare its own capabilities related to EMLSR and EMLMR operations. The MLD Capabilities and Operations field occupies 0 or 2 bytes and contains operating description related to the multi-link device, such as Traffic identifier (TID) to link (TID-to-link) mapping capability support, and Application Aware Routing (AAR) capability support, etc. The MLD identifier (ID) field occupies 0 or 1 byte. The EL Capabilities field occupies 0 or 2 bytes, and indicates the identification information of the AP MLD indicated by the current multi-link element.

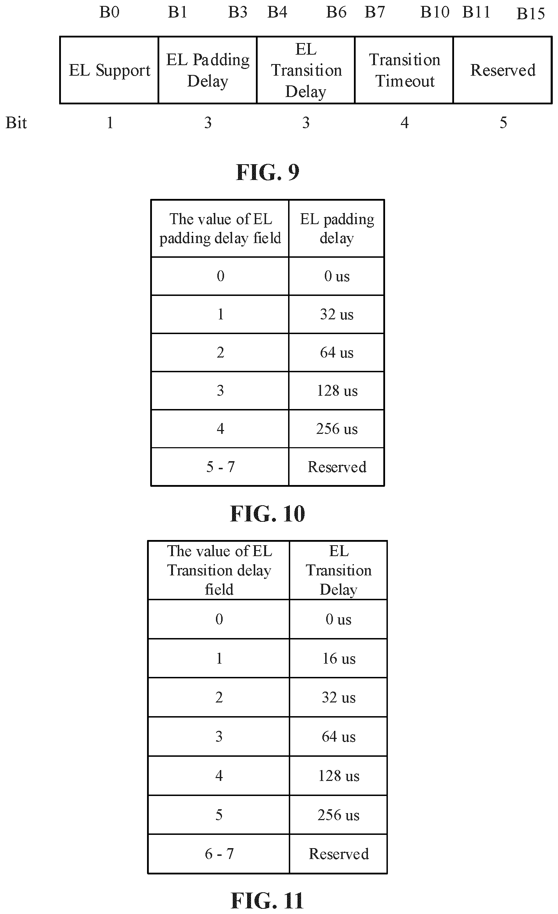

The format of the newly added EL Capabilities field is shown in FIG. 9. The EL Support field occupies 1 bit: B0. The EL Padding Delay field occupies 3 bits: B1 to B3. The EL Transition Delay field occupies 3 bits: B4 to B6. The Transition Timeout field occupies 4 bits: B7 to B10. The reserved field occupies 5 bits: B11 to B15.

The EL Support field represents whether the device supports the enhanced link operating mode of the NSTR mobile AP MLD. In the NSTR mobile AP MLD, when EL Support is 1, it represents that the NSTR mobile AP MLD supports the enhanced link operating mode. When EL Support is 0, it represents that the NSTR mobile AP MLD does not support the enhanced link operating mode. In the non-AP MLD or the non-AP STA, when EL Support is 1, it represents that the non-AP MLD or the non-AP STA supports the NSTR mobile AP MLD to start the enhanced link operating mode. When EL Support is 0, it represents that the non-AP MLD or the non-AP STA does not support the NSTR mobile AP MLD to start the enhanced link operating mode.

The EL Padding Delay field indicates the time needed for the NSTR mobile AP MLD to transition from the initial operating state to the enhanced operating state after the NSTR mobile AP MLD entering the enhanced link operating mode. The EL Padding Delay of the non-AP MLD or the non-AP STA is 0. FIG. 10 is a coding mode of the EL Padding Delay.

The EL Transition Delay field indicates the time needed for the NSTR mobile AP MLD to transition from the enhanced operation state back to the initial operation state. FIG. 11 is a coding mode of the EL Transition Delay.

The Transition Timeout field indicates the expiration time of an EL OMN frame.

The second indication manner: an existing capabilities field is reused.

The EML Capabilities field in the basic multi-link element is reused to describe the enhanced link capability information of the NSTR mobile AP MLD.

Firstly, it is necessary to add the EL Support field in the EML Capabilities field to describe whether the device supports the enhanced link operating mode of the NSTR mobile AP MLD. The NSTR mobile AP MLD supports the enhanced link operating mode. When EL Support is 0, it represents that the NSTR mobile AP MLD does not support the enhanced link operating mode. In the non-AP MLD or the non-AP STA, when EL Support is 1, it represents that the non-AP MLD or the non-AP STA supports the NSTR mobile AP MLD to start the enhanced link operating mode. When EL Support is 0, it represents that the non-AP MLD or the non-AP STA does not support the NSTR mobile AP MLD to start the enhanced link operating mode.

The NSTR mobile AP MLD, and the non-AP MLD or the non-AP STA that support the enhanced link operating mode first need to set EML Capabilities Present in the basic multi-link element of the management frame to 1, and set the EL Support capabilities field in the EML Capabilities to 1. Other attribute fields are set according to their own capabilities.

The EMLSR Padding Delay in the EML Capabilities field of the NSTR mobile AP MLD represents the time needed for the NSTR mobile AP MLD to transition from the initial operating state to the enhanced operating state. The EMLSR Transition Delay in the EML Capabilities field of the NSTR mobile AP MLD represents the time needed for the NSTR mobile AP MLD to return from the enhanced operating state to the initial operating state. The Transition Timeout in the EML Capabilities field of the NSTR mobile AP MLD indicates the expiration time of the EL OMN frame. The encoding mode is the original encoding mode.

The indication manners of the EL support field include an implicit indication manner and an explicit indication manner.

The implicit indication manner of the EL Support field

In the implicit capability indication manner, the EMLSR Support field is reinterpreted.

For the NSTR mobile AP MLD, this bit represents whether the NSTR mobile AP MLD supports the enhanced link operating mode: if the NSTR mobile AP MLD supports the enhanced link operating mode, then B0 is set to 1; and if the NSTR mobile AP MLD does not support the enhanced link operating mode, then B0 is set to 0.

For the non-AP MLD device or the non-AP STA device, this bit represents whether the non-AP MLD or the non-AP STA supports the enhanced link operating mode of the NSTR Mobile AP MLD: if the non-AP MLD or the non-AP STA supports the enhanced link operating mode of the NSTR Mobile AP MLD, then B0 is set to 1; and if the non-AP MLD or the non-AP STA does not support the enhanced link operating mode of the NSTR Mobile AP MLD, then B0 is set to 0.

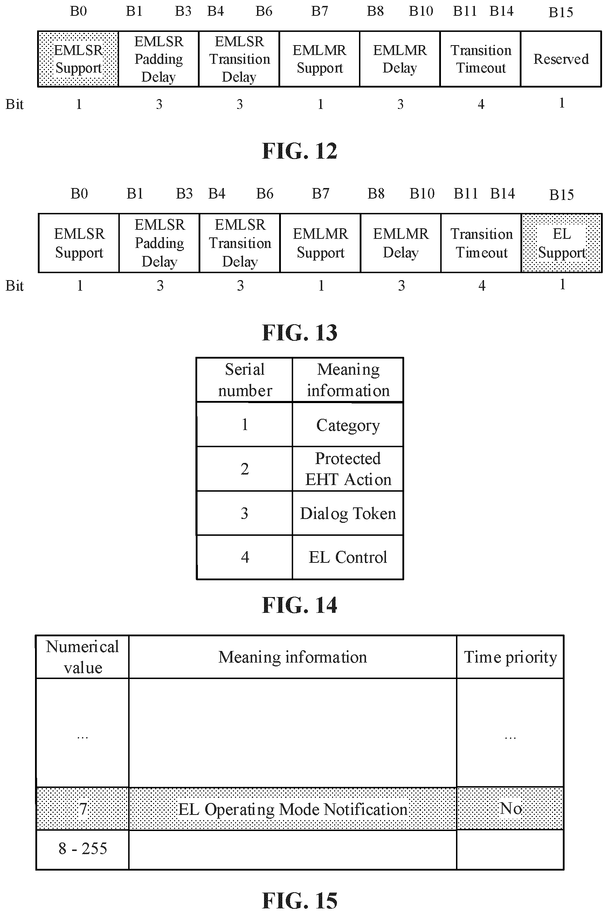

FIG. 12 is the modified EML Capabilities field. As shown in FIG. 12, the EMLSR Support field occupies 1 bit of B0; the EMLSR Padding Delay field occupies 3 bits of B1 to B3; the EMLSR Transition Delay field occupies 3 bits of B4 to B6; the enhanced multi-link Multi Radio (EML MR) Support field occupies 1 bit of B7; the EMLMR Delay field occupies 3 bits of B8 to B 10; the Transition Timeout field occupies 4 bits of B11 to B14; and the reserved bit occupies 1 bit of B15.

In FIG. 12, the EMLSR Support field indicates whether the current device supports EMLSR operations; the EMLSR Padding Delay field indicates the time needed to complete combination of spatial streams or transition of spatial streams in the EMLSR operating mode; the EMLSR Transition Delay field indicates the time needed to release the spatial stream combining state in the EMLMR operating mode; the EMLMR Support field indicates whether the current device supports EMLMR operations; the EMLMR Delay field indicates the minimum time needed for the device to complete spatial stream combining in the EMLMR operating mode; and the Transition Timeout field indicates the maximum time to wait for a response after transmitting the enhanced multi-link operating mode notification frame.

The explicit indication manner of the EL Support field.

In the explicit capability indication method, the reserved bit B15 in the EML Capabilities field is set to EL Support to describe the required functions.

For the NSTR mobile AP MLD, this bit represents whether the NSTR mobile AP MLD supports the enhanced link operating mode: if the NSTR mobile AP MLD supports the enhanced link operating mode, then B15 is set to 1; and if the NSTR mobile AP MLD does not support the enhanced link operating mode, then B15 is set to 0.

For the non-AP MLD device or the non-AP STA device, this bit represents whether the non-AP MLD or the non-AP STA supports the NSTR Mobile AP MLD to start the enhanced link operating mode: if the non-AP MLD or the non-AP STA supports the NSTR Mobile AP MLD to start the enhanced link operating mode, then B15 is set to 1; and if the non-AP MLD or the non-AP STA does not support the NSTR Mobile AP MLD to start the enhanced link operating mode, then B15 is set to 0.

FIG. 13 is the modified EML Capabilities field. As shown in FIG. 13, the EMLSR Support field occupies 1 bit of B0; the EMLSR Padding Delay field occupies 3 bits of B1 to B3; the EMLSR Transition Delay field occupies 3 bits of B4 to B6; the EML MR Support field occupies 1 bit of B7; the EMLMR Delay field occupies 3 bits of B8 to B10; the Transition Timeout field occupies 4 bits of B 11 to B 14; and the EL Support field occupies 1 bit of B15.

The process of starting the enhanced link operating mode of the NSTR mobile AP MLD and the process of closing the enhanced link operating mode of the NSTR mobile AP MLD.

Design description of the EL mode operation frame.

There are two design manners for the EL mode operation frame. One is to create a new operating mode indication frame to perform the starting and closing of the EL operating mode; the other is to reuse existing EML OMN and add relevant attributes of the EL operating mode in EML Control to perform the starting and closing of the EL operating mode.

The first design manner: a new EL OMN is established.

EL OMN is transmitted by the NSTR mobile AP MLD to notify changes in its own operating mode to the non-AP MLD or the non-AP STA. The Action field of EL OMN is shown in FIG. 14, which includes a Category field, a Protected EHT Action field, a Dialog Token, and an EL Control field.

An EL Operating Mode Notification flag bit is added to the Protected EHT Action field, and the encoding mode of the modified Protected EHT Action field is shown in FIG. 15. When the Protected EHT Action field has a value of 7, which represents EL Operating Mode Notification, it indicates that the EL OMN includes the EL Control field.

The value of the Dialog Token is a non-zero value selected by the NSTR mobile AP MLD. When the non-AP MLD or the non-AP STA receives an EL OMN through unicast, the Dialog Token in the returned EL OMN is the same as the Dialog Token receiving the EL OMN.

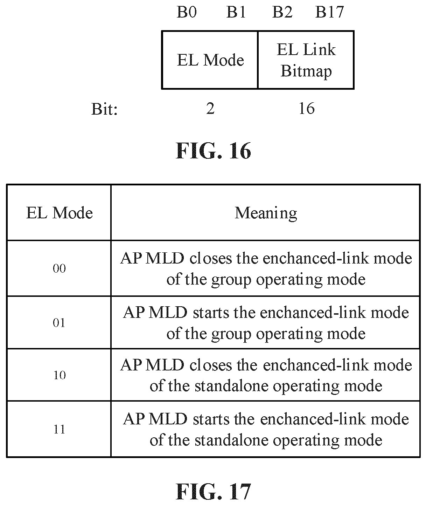

The format of the EL Control field is shown in FIG. 16, which includes 18 bits. An EL Mode field occupies 2 bits of B0 and B1, and an EL Link Bitmap field occupies 16 bits of B2 to B17.

Here, the EL Mode field has two bits. The first bit represents the enhanced link operating mode operated by the NSTR mobile AP MLD is the group operating mode or the standalone operating mode; and the second bit represents that the NSTR mobile AP MLD starts or closes the enhanced link operating mode. FIG. 17 shows the encoding mode of the EL Mode field.

The available links between the NSTR mobile AP MLD and the non-AP MLD or the non-AP STA that participate in the enhanced link operating mode are referred to as EL links. The EL links are indicated and described through the EL Link Bitmap in EL OMN. If the i-th bit of the Link Bitmap is 1, it represents that the i-th link is an EL link, which participates in the enhanced link operating mode.

The second design manner: the existing EML OMN is reused.

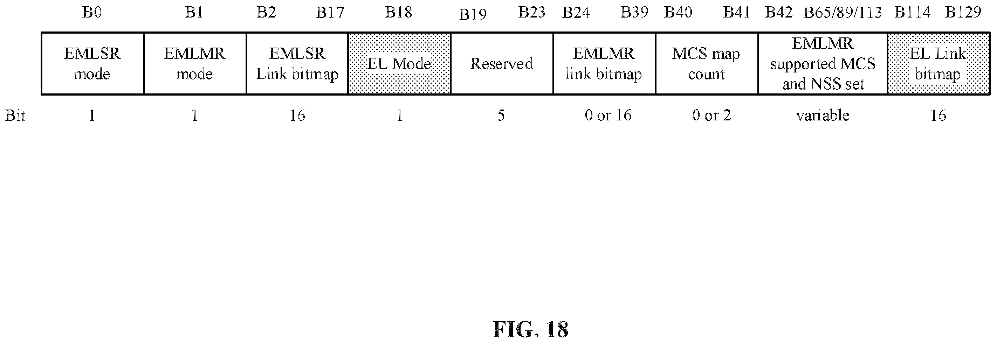

The existing EML OMN is reused and some attribute fields thereof are modified. As shown in FIG. 18, the EL Mode field is added to B18 and B 19 of the EML Control field in the EML OMN frame, and the EL Link Bitmap field is added to the tail of the EML OMN frame. As shown in FIG. 18, the EML OMN includes: an EML SR mode field, an EML MR mode field, an EML SR Link bitmap field, a Reversed field, an EML MR link bitmap field, a Modulation and Coding Scheme (MCS) map count (MCS map count) field, an EMLMR supported MCS and number of spatial streams (NSS) set (Support MCS And NSS Set) field, and an EL Link bitmap field.

The designs of the formats for the EL Mode field and EL Link Bitmap field are the same as the first design manner.

The process of starting the enhanced link operating mode.

### 1) The process of starting the group operating mode.

When the NSTR mobile AP MLD desires to start the group operating mode in the enhanced link operating mode, the NSTR mobile AP MLD transmits an EML OMN frame or EL OMN frame with EL Mode being 01 through broadcast, to inform all associated non-AP MLDs or non-AP STAs that the NSTR mobile AP MLD is about to enter the enhanced link operating mode. After receiving the EML OMN frame or EL OMN frame with EL Mode being 01, the non-AP MLD or the non-AP STA does not need to respond to the frame. After completing transmission of the EML OMN frame, the NSTR mobile AP MLD enters the enhanced link operating mode. After the NSTR mobile AP MLD enters the enhanced link operating mode, the non-AP MLD or the non-AP STA cannot transmit EML OMN to start the EMLSR or EMLMR mode.

When the NSTR mobile AP MLD is associated with multiple non-AP MLDs or non-AP STAs that can support the enhanced link operating mode, and the NSTR mobile AP MLD prepares to start the enhanced link operating mode with a certain non-AP MLD or non-AP STA, then the NSTR mobile AP MLD may choose to start the group operating mode instead of the standalone operating mode. On the one hand, the non-AP MLD or non-AP STA associated with the NSTR mobile AP MLD is informed that the NSTR mobile AP MLD is about to enter the enhanced link operating mode; on the other hand, the situation where other non-AP MLDs or non-AP STAs prepare to start the enhanced link operating mode with the NSTR mobile AP MLD can be handled, thereby reducing negotiation costs between the NSTR mobile AP MLD and the non-AP MLD or the non-AP STA and improving operation efficiency.

### 2) The process of starting the standalone operating mode.

If the NSTR mobile AP MLD desires to enter the standalone operating mode of the enhanced link operating mode, it transmits an EML OMN frame or EL OMN frame with EL Mode being 11 to the associated STA over the primary link, to inform the corresponding STA that the NSTR mobile AP MLD is about to enter the enhanced link operating mode. After receiving the EML OMN frame or EL OMN frame with EL Mode being 11, the non-AP MLD or the non-AP STA needs to respond to the frame with an EML OMN and set the EL Mode to 11. The NSTR mobile AP MLD starts timing with the end time of EML OMN frame transmission as the starting point. After the time indicated by Transition Timeout expires or after the AP receives the EML OMN or EL OMN frame returned from the STA, the NSTR mobile AP MLD enters the enhanced link operating mode. After the device starts the enhanced link operating mode of the NSTR mobile AP MLD, the NSTR mobile AP MLD is in the initial operating state of the enhanced link operating mode when communicating with the STA. After the NSTR mobile AP MLD enters the enhanced link operating mode, the non-AP MLD or the non-AP STA cannot transmit EML OMN to start EMLSR or EMLMR mode.

The process of closing the enhanced link operating mode.

### 1) The process of closing the group operating mode.

When the NSTR mobile AP MLD desires to quit the group operating mode in the enhanced link operating mode, the NSTR mobile AP MLD transmits an EML OMN frame or EL OMN frame with EL Mode being 00 through broadcast, to inform all associated non-AP MLDs or non-AP STAs that the NSTR mobile AP MLD is about to quit the enhanced link operating mode. After receiving the EML OMN frame or EL OMN frame with EL Mode being 00, the non-AP MLD or the non-AP STA does not need to respond to the frame. After completing transmission of the EML OMN frame, the NSTR mobile AP MLD quits the enhanced link operating mode.

### 2) The process of closing the standalone operating mode.

If the NSTR mobile AP MLD desires to quit the standalone operating mode of the enhanced link operating mode, the NSTR mobile AP MLD transmits an EML OMN frame or EL OMN frame with EL Mode being 10 to the associated STA over the primary link, to inform the corresponding STA that the NSTR mobile AP MLD is about to quit the enhanced link operating mode. After receiving the EML OMN frame or EL OMN frame with EL Mode being 10, the non-AP MLD or the non-AP STA needs to respond to the frame with an EML OMN frame and set the EL Mode to 10. The NSTR mobile AP MLD starts timing with the end time of EML OMN frame transmission as the starting point. After the time indicated by Transition Timeout expires or after the AP receives the EML OMN returned from the STA, the NSTR mobile AP MLD quits the enhanced link operating mode.

Starting and ending of EL data frame transmission of the NSTR mobile AP MLD.

### 1) A starting flag for downlink EL data transmission.

When the NSTR mobile AP MLD starts the enhanced link operating mode and obtains TXOP, before performing the downlink EL data transmission with the non-AP MLD or non-AP STA, the NSTR mobile AP MLD first needs to transition from the initial operating state to the enhanced operating state within the EL Padding Delay time.

In order to prevent the transmission resources between the NSTR mobile AP MLD and the non-AP MLD or the non-AP STA from being preempted within the transition time, the NSTR mobile AP MLD may protect the transmission resources during the operating state transition after obtaining TXOP. The manners for protecting the transmission resources during the operating state transition include:

The first protection manner: the NSTR mobile AP MLD transmits an RTS frame to the non-AP MLD or the non-AP STA at the beginning of TXOP, to set the NAV for the current TXOP. After completing the transition of operating state, the NSTR mobile AP MLD performs downlink EL data transmission in the enhanced operating state.

The second protection manner: the NSTR mobile AP MLD transmits one or more specific types of frames to the non-AP MLD or the non-AP STA at the beginning of TXOP. The available frames include but are not limited to NDPA + NDP, CTS to self, QoS-null, and Data frames, etc. By transmitting the frame sequence, TXOP protection is achieved. After the NSTR mobile AP MLD completes the transition of operating state, the NSTR mobile AP MLD performs downlink EL data transmission in the enhanced operating state. This method is detailed in the third embodiment.

### 2) The manners for starting uplink EL data transmission.

There are two manners for starting uplink EL data transmission, namely implicit starting by using a transmission rule and explicit starting by using a trigger frame.

The first starting manner: an implicit starting manner by using a transmission rule.

When the NSTR mobile AP MLD is in the enhanced link operating mode, the NSTR mobile AP MLD receives an initial data frame transmitted in a spatial stream form from the non-AP MLD or the non-AP STA, it means that the non-AP MLD or the non-AP STA requests the NSTR mobile AP MLD to start an uplink EL data frame interaction. The initial data frame should be transmitted in a non-HT PPDU format or a non-HT duplicate PPDU format, with a transmission rate of 6Mbps, 12Mbps, or 24Mbps.

Here, the NSTR mobile AP MLD is in the enhanced link operating mode, and receives the initial data frame transmitted in the spatial stream form from the non-AP MLD or the non-AP STA in the second operation. After the NSTR mobile AP MLD receives the initial data frame in the spatial stream form from the non-AP MLD or the non-AP STA, the NSTR mobile AP MLD needs to transition from the first operation to the enhanced operating state, i.e. the third operation.

The second starting manner: an explicit starting manner by using a control frame.

In the A-Control field, an EL Request Control field is added, and a Control ID value of the EL Request Control field is set to 10. The Control ID code of the modified A-Control is shown in Table 1.

**Table 1: Example of Control ID code definition**

| Control ID value | Meaning | Control Information Length (bits) |
|---|---|---|
| 0 | Triggered response scheduling | 26 |
| 1 | Operating mode | 12 |
| 2 | High efficiency link adaptation (HE link adaptation) | 26 |
| 3 | Buffer status report | 26 |
| 4 | Uplink power headroom (UL power headroom) | 8 |
| 5 | Bandwidth query report | 10 |
| 6 | Command and status | 8 |
| 7 | EHT operating mode | 6 |
| 8 | Single response scheduling | 10 |
| 9 | AP assistance request | 20 |
| 10 | EL Request Control | 2 |
| 11-14 | Reversed | |
| 15 | Ones need expansion surely | 26 |

As shown in Table 1, when the Control ID of A-Control is 10, the A-Control is EL Request Control. The EL Request Control contains a Control Information field for flag information description, and the length of the Control Information field in EL Request Control is 2.

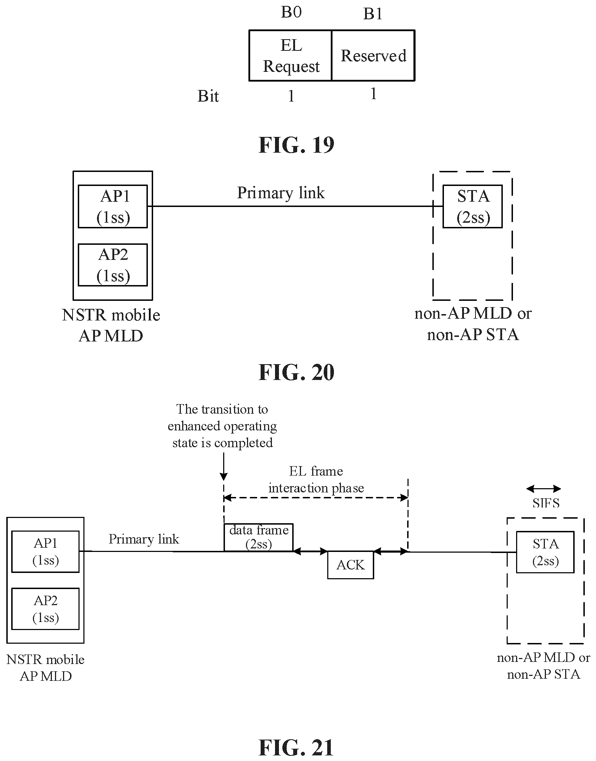

The format of Control Information of EL Request Control is shown in FIG. 19, which includes an EL Request field and a Reversed field. The EL Request bit in the Control Information of EL Request Control is B0, which occupies 1 bit, and represents that the non-AP MLD or the non-AP STA transmitting the control frame requests to start an uplink EL data frame exchange. The Reserved bit occupies 1 bit of B1.

When the NSTR mobile AP MLD is in the enhanced link operating mode, if EL Request of EL Request Control in the initial data frame received by the NSTR mobile AP MLD transmitted by the non-AP MLD or the non-AP STA is 1, it means that the non-AP MLD or the non-AP STA requests the NSTR mobile AP MLD to start an uplink EL data frame interaction and transition from the initial operating state to the enhanced operating state; and if EL Request of EL Request Control in the initial data frame received by the NSTR mobile AP MLD is 0 or the initial data frame does not contain EL Request Control, there will be no uplink EL data frame interaction in the later time.

The NSTR mobile AP MLD needs to complete the transition of the operating mode within the EL Padding Delay time. After transmitting the initial data frame or the EL Padding Delay time of RTS, the non-AP MLD or the non-AP STA may perform uplink EL data transmission with the NSTR mobile AP MLD.

When the NSTR mobile AP MLD is in the standalone operating mode, the NSTR mobile AP MLD allows the non-AP MLD or the non-AP STA to use either of the above two manners for uplink EL data transmission initialization. When the NSTR mobile AP MLD is in the group operating mode, the NSTR mobile AP MLD only allows the non-AP MLD or the non-AP STA to perform uplink EL data transmission initialization in the explicit starting manner by using the trigger frame. That is, when the NSTR mobile AP MLD is in the group operating mode, if the non-AP MLD or the non-AP STA desires to start the uplink EL data transmission, the non-AP MLD or the non-AP STA must actively transmit an RTS frame to request to start the uplink EL data transmission .

### 3) An end identifier.

When the NSTR mobile AP MLD is about to end downlink EL data transmission with the non-AP MLD or the non-AP STA, the NSTR mobile AP MLD does not need to notify the non-AP MLD or the non-AP STA that it is about to end the EL data transmission state. After completing EL data transmission, the NSTR mobile AP MLD should immediately perform spatial stream transition operation and return to the listening mode, i.e. the initial operating state, within the EL Transition Delay time.

When the NSTR mobile AP MLD performs uplink EL data transmission with the non-AP MLD or the non-AP STA, the AP takes the following events as the end identifier:
1) If no instant response to the previous PPDU from the STA is required, the end time of the PPDU reception is used as the starting time point; and if an instant response to the previous PPDU from the STA is required, the end time of transmission of an acknowledgement frame of the PPDU is taken as the starting time point. Starting from the starting time point, the MAC of the AP does not receive the PHY-RXSTART.indication service primitive within the time of aSIFSTime + aSlotTime + aRxPHYStartDelay.
2) For the PPDU to which an instant response is required, the AP does not respond to the STA within one SIFS.

After the AP receives an end flag, it returns to the initial operating state within the EL Transition Delay time.

The method for wireless communication mentioned above will be further described using the scenario shown in FIG. 20 below.

As shown in FIG. 20, the left side of FIG. 20 is an NSTR mobile AP MLD device, which has 2 affiliated APs. Each AP has 1 spatial stream (ss). On the right side is a non-AP MLD or non-AP STA. The STA has 2 spatial streams. After the transition to the enhanced operating state of the STA is completed, the STA is connected to AP1 of the NSTR mobile AP MLD through the primary link, and the transmitted data frames are transmitted using 2 spatial streams.

In the scenario shown in FIG. 20, if data transmission is carried out according to the existing multi-link access rules, there will be the following limitations:

The first limitation: limitation of the number of AP1 spatial streams. When AP1 performs data interaction with the non-AP MLD or the non-AP STA, one spatial stream is used for data transmission, and another spatial stream owned by the non-AP MLD or the non-AP STA is idle.

The second limitation: limitation of NSTR mobile AP MLD transmission rules. When AP1 performs data interaction with the non-AP MLD or the non-AP STA over the primary link, AP2 cannot perform data interaction with other STAs, wasting the spatial stream resources owned by AP2 of the NSTR mobile AP MLD.

In an embodiment of the disclosure, the scenario shown in FIG. 20 may be implemented as follows.

The first embodiment: the NSTR mobile AP MLD interacts with the non-AP MLD or the non-AP STA for downlink EL data frames.

As shown in FIG. 21, the NSTR mobile AP MLD transmits an EML OMN frame or EL OMN frame through broadcast, to start the enhanced link operating mode in the group operating mode, or interacts with a specific non-AP MLD or non-AP STA for an EML OMN or EL OMN frame through unicast, to start the enhanced link operating mode in the standalone operating mode. Before starting the interaction of downlink EL data frames, the NSTR mobile AP MLD should complete the transition from the initial operating state to the enhanced operating state. After the transition to enhanced operating state is completed, the NSTR mobile AP MLD interacts with the non-AP MLD or the non-AP STA for downlink EL data frames, and the transmitted downlink EL data is transmitted using 2 spatial streams.

The second embodiment: the NSTR mobile AP MLD interacts with the non-AP MLD or the non-AP STA for downlink EL data frames using NAV settings to protect TXOP.

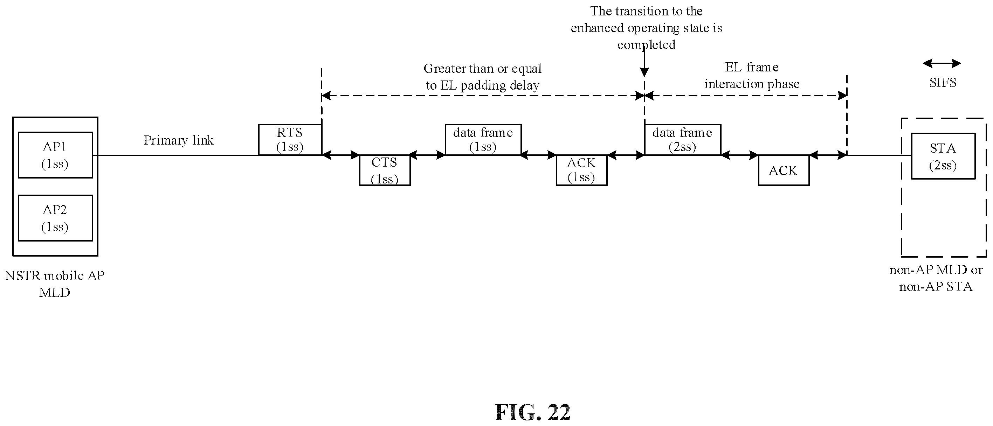

As shown in FIG. 22, the NSTR mobile AP MLD transmits an EML OMN frame or EL OMN frame through broadcast, to start the enhanced link operating mode in the group operating mode, or interacts with a specific non-AP MLD or non-AP STA for an EML OMN or EL OMN frame through unicast, to start the enhanced link operating mode in the standalone operating mode. Before starting the interaction of downlink EL data frames, the NSTR mobile AP MLD first transmits an RTS frame to the non-AP MLD or the non-AP STA over the primary link, to perform the NAV setting protection for the current primary link, preventing that during the operating state of the NSTR mobile AP MLD, the current TXOP is preempted by other devices; and after receiving the RTS frame, the non-AP MLD or the non-AP STA returns a CTS frame to the NSTR mobile AP MLD over the primary link. After completing the transition to the enhanced operating state, the NSTR mobile AP MLD uses 2 spatial streams for downlink EL data transmission. After the RTS/CTS interaction is completed, the AP transmits a data frame with a duration for channel occupancy, and this duration is greater than the time of EL padding delay needed for the NSTR mobile AP MLD to transition from the initial operating state to the enhanced operating state. Here, one spatial stream is used for interaction between RTS/CTS and data frame before the transition to the enhanced operating state is completed.

The third embodiment: the NSTR mobile AP MLD interacts with the non-AP MLD or the non-AP STA for downlink EL data frames, to protect TXOP by transmitting a frame exchange sequence.

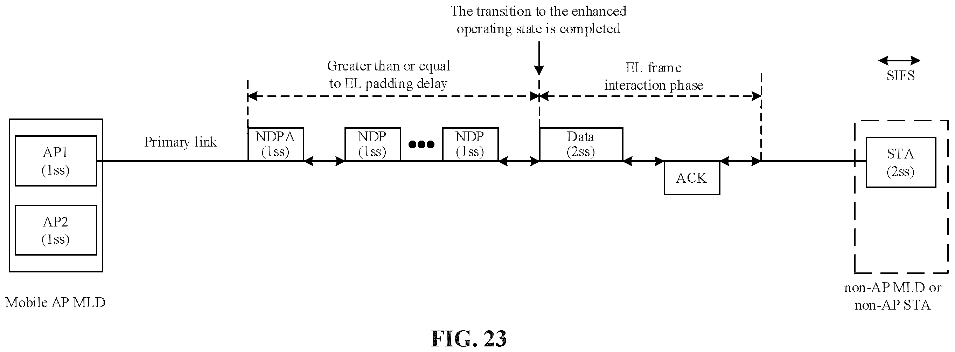

As shown in FIGs. 23 to 26, first the NSTR mobile AP MLD transmits an EML OMN or EL OMN frame through broadcast, to start the group operating mode, or interacts with a specific non-AP MLD or non-AP STA for an EML OMN or EL OMN frame through unicast, to start the standalone operating mode. Before starting the interaction of downlink EL data frames, the NSTR mobile AP MLD first transmits a specific frame sequence to the non-AP MLD or the non-AP STA over the primary link, to cause the current link to be in a busy state, thus preventing the current TXOP from being preempted by other devices during operating state transition of the NSTR mobile AP MLD. After completing the transition to the enhanced operating state, the NSTR mobile AP MLD uses 2 spatial streams for downlink EL data transmission. The duration of the specific frame sequence should be greater than or equal to the time of EL padding delay needed for the NSTR mobile AP MLD to transition from the initial operating state to the enhanced operating state. The NSTR mobile AP MLD uses 1 spatial stream to transmit this specific frame sequence.

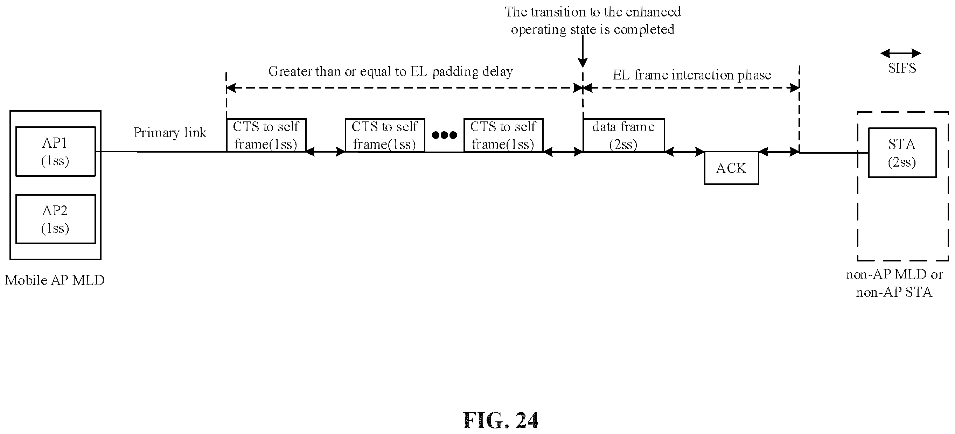

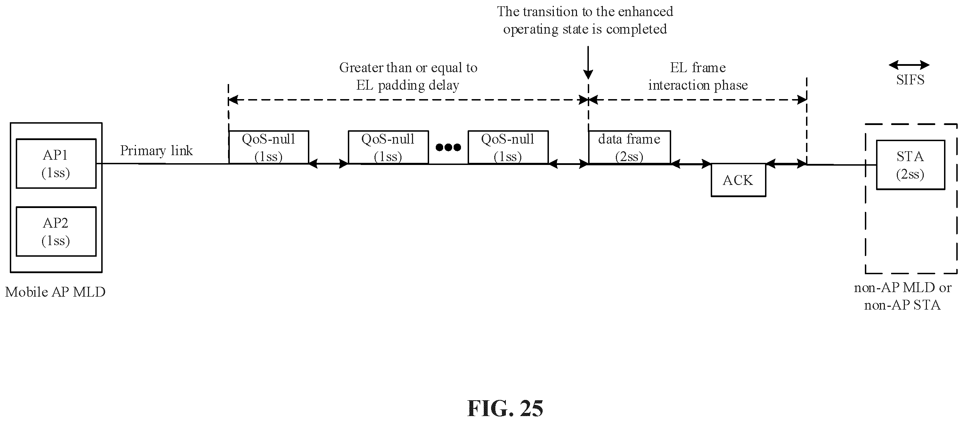

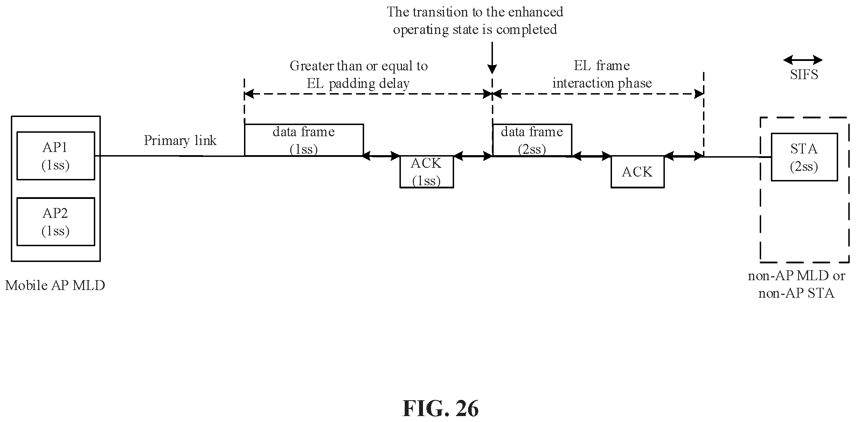

In FIG. 23, the specific frame sequence includes NDPA + NDP, which is used for TXOP protected downlink EL data transmission. In FIG. 24, the specific frame sequence includes multiple CTS to self frames, which are used for TXOP protected downlink EL data transmission. In FIG. 25, the specific frame sequence includes multiple QoS-null frames, which are used for TXOP protected downlink EL data transmission. In FIG. 26, the specific frame sequence includes multiple Data frames, which are used for TXOP protected downlink EL data transmission.

The fourth embodiment: the NSTR mobile AP MLD starts to interact with the non-AP MLD or the non-AP STA for uplink EL data frames, by using transmission rules.

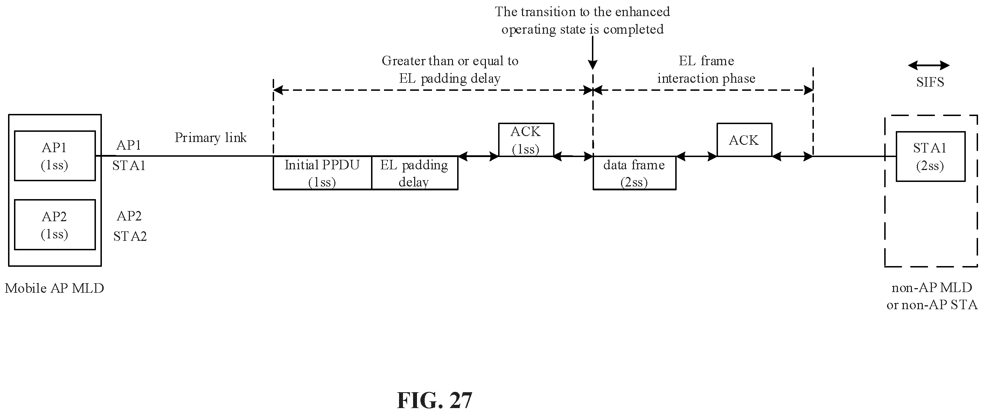

As shown in FIG. 27, the NSTR mobile AP MLD interacts with a specific non-AP MLD or non-AP STA for a unicast EML OMN frame or EL OMN frame, to start the standalone operating mode. When using transmission rules to start an uplink EL data frame interaction over the primary link, the non-AP MLD or the non-AP STA needs to transmit an initial data frame (initial PPDU) over the primary link. The interaction duration of the initial data frame needs to be greater than or equal to the EL Padding Delay of the NSTR Mobile AP MLD, and the initial data frame should be transmitted in a non-HT PPDU or non-HT duplicate PPDU format at a transmission rate of 6Mbps, 12Mbps, or 24Mbps. In an example, the non-AP MLD or the non-AP STA is padded within the initial data frame, with the padding duration selected from the EL Padding Delay of the NSTR Mobile AP MLD, such that the duration of the initial data frame is greater than EL Padding Delay. The NSTR Mobile AP MLD operates in the enhanced link operating mode and receives an initial data frame of a single spatial stream from the non-AP MLD or the non-AP STA. When it is determined that the transmission of the initial data frame meets the transmission rules, the NSTR Mobile AP MLD performs transition of the operating state and completes the operating state transition and transitions to the enhanced operating state within the aSIFStime time of a returned response frame. After completing the transition to enhanced operating state, the NSTR mobile AP MLD uses 2 spatial streams for uplink EL data transmission.

The fifth embodiment: the NSTR mobile AP MLD starts, to interact with the non-AP MLD or the non-AP STA for uplink EL data frames, which is started by frame trigger.

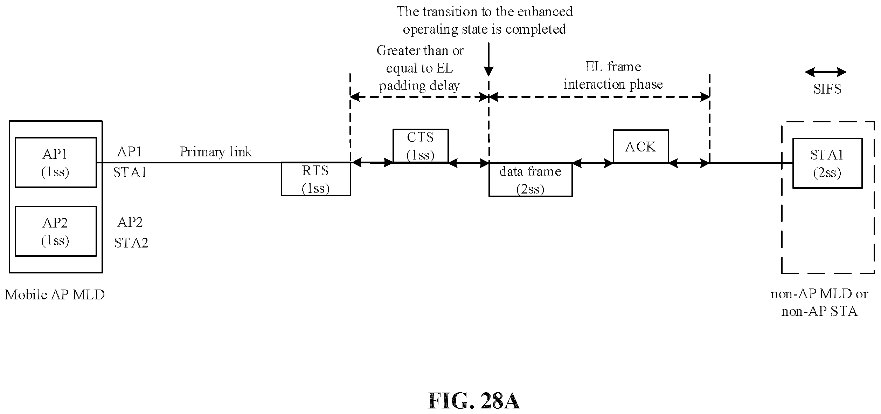

As shown in FIG. 28A, the NSTR mobile AP MLD transmits an EML OMN frame or EL OMN frame through broadcast, to start the group operating mode; or interacts with a specific non-AP MLD or non-AP STA for an EML OMN frame or EL OMN frame through unicast, to start the standalone operating mode. When starting an uplink EL data frame interaction over the primary link by frame trigger, the non-AP MLD or the non-AP STA needs to transmit an RTS frame over the primary link. When the NSTR Mobile AP MLD operates in the enhanced link operating mode and receives an RTS frame from the non-AP MLD or the non-AP STA, the NSTR Mobile AP MLD performs operating state transition and completes the operating state transition within the time of EL padding delay after receiving the RTS. When the NSTR mobile AP MLD is in the group operating mode of the enhanced link operating mode, the non-AP MLD or the non-AP STA must select this trigger method.

As shown in FIG. 28A, the NSTR mobile AP MLD has two APs, each with 1 spatial stream. The non-AP MLD or the non-AP STA has two spatial streams. The NSTR mobile AP MLD is connected to the non-AP MLD or the non-AP STA through the primary link.

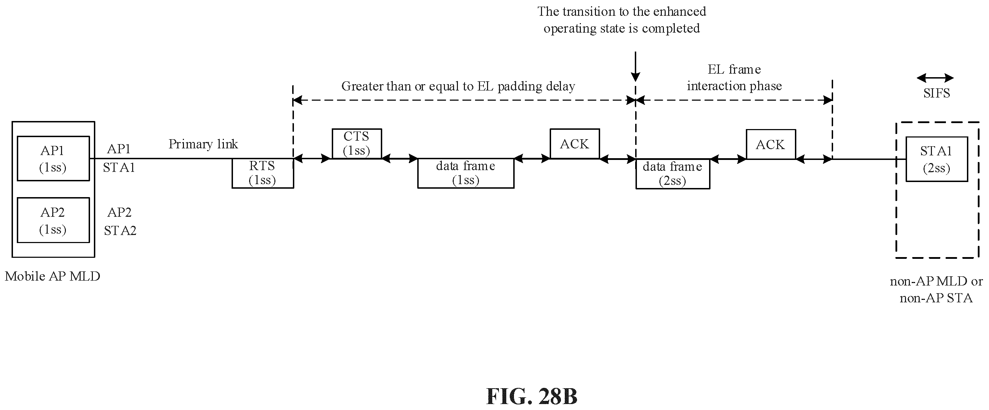

If the RTS/CTS interaction time cannot meet the time requirements of EL padding delay needed for the transition of the mobile AP MLD, then after the RTS/CTS interaction is completed, as shown in FIG. 28B, a frame sequence consisting of data frames is transmitted by the non-AP MLD or the non-AP STA for time occupation, to ensure that the mobile AP MLD has sufficient time to perform operating mode transition.

As shown in FIG. 28A or FIG. 28B, the NSTR mobile AP MLD uses 1 spatial stream for RTS/CTS and uplink data frame transmission before completing the transition to the enhanced operating state. After completing the transition to enhanced operating state, the NSTR mobile AP MLD uses 2 spatial streams for uplink EL data transmission.

In an embodiment of the disclosure, as shown in FIGs. 21 to 28B, the interval between two frames for interaction between the non-AP MLD or the non-AP STA and the AP MLD is one SIFS.

In related technologies, when the AP MLD is of the type of the NSTR mobile AP MLD, the data transmission efficiency in the network is limited by the resource constraints of both the NSTR mobile AP MLD and the non-AP MLD/the non-AP STA, and the synchronization transmission rules of the NSTR mobile AP MLD needs to be followed to avoid the inter domain conflict problem. The method for wireless communication according to embodiments of disclosure improves the performance of the side of the NSTR mobile AP MLD by designing an enhanced link operating mode of the NSTR mobile AP MLD. On the one hand, the available transmission resources for both parties are increased, and on the other hand, the inter domain conflict problem faced by the NSTR mobile AP MLD during data transmission can be effectively avoided. By using reasonable scheduling methods, resources used by the NSTR mobile AP MLD are dynamically allocated based on the real-time traffic transmission and reception status, and enhanced processing of the NSTR mobile AP MLD data transmission and reception is completed.

In an embodiment of the disclosure, the parties involved in the enhanced link operating mode may include but is not limited to the NSTR mobile AP MLD, and may also include other AP MLDs, or non-AP MLDs or non-AP STAs. By using the enhanced link operating mode and attribute fields, the spatial flow capability enhancement operation of any AP MLD over the EL operating link can be completed, or the spatial flow capability enhancement operation of non-AP MLDs or non-AP STAs over the EL operating link can be supported.

Preferred implementations of the disclosure are described in detail in conjunction with accompanying drawings. However, the disclosure is not limited to the particular details in the above implementations. Within the range of the technical idea of the disclosure, multiple simple variations can be made to the technical solutions of the disclosure, and these variations all fall within the scope of protection of the disclosure. For example, the particular technical features described in the above particular implementations may be combined in any suitable way without conflict. To avoid unnecessary repetition, the possible combinations are not described in the disclosure. For example, different implementations of the disclosure may also be combined arbitrarily without departing from the concept of the disclosure, which shall be considered as content disclosed by the disclosure as well. For another, without conflict, the various embodiments described in the disclosure and/or technical features of the various embodiments may be combined with the related art arbitrarily, and the technical solutions obtained via the combination shall also fall within the scope of protection of the disclosure.

It should also be understood that in various method embodiments of the present disclosure, the size of the sequence number of the above processes does not mean the order of execution, and the execution order of each process should be determined according to its function and inherent logic, and should not constitute any limitation on the implementation of embodiments of the present disclosure. Further, in embodiments of the present disclosure, the terms "downlink", "uplink" and "sidelink" are used to represent the transmission direction of the signal or data, herein "downlink" is used to represent that the transmission direction of the signal or data is a first direction sent from a site to a user device of a cell, "uplink" is used to represent that the transmission direction of the signal or data is a second direction sent from the user device of the cell to the site, and "sidelink" is used to represent that the transmission direction of the signal or data is a third direction sent from a user device 1 to a user device 2. For example, "downlink signal" represents that the transmission direction of the signal is the first direction. In addition, in embodiments of the present disclosure, the term "and/or" is only an association relationship describing associated objects and represents that three relationships may exist. Specifically, A and/or B may represent three conditions: i.e., independent existence of A, existence of both A and B and independent existence of B. In addition, the character "/" herein generally indicates that the contextual objects are in an "or" relationship.

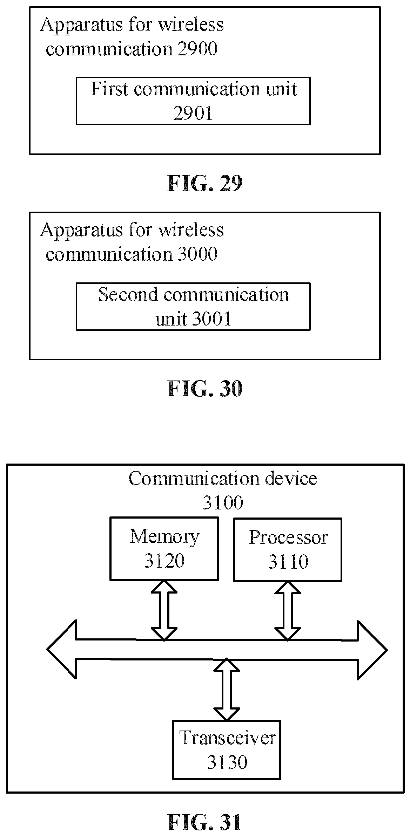

FIG. 29 is a structural composition diagram of an apparatus for wireless communication according to an embodiment of the disclosure, which is applied to an AP MLD. As shown in FIG. 29, the apparatus 2900 for wireless communication includes first communication unit 2901.

The first communication unit 2901 is configured to perform frame exchange with a non-access point device over a first link. A link mode of the AP MLD includes a first mode. When the AP MLD is in the first mode, the first link includes a first number of available spatial streams for reception or transmission. When the AP MLD is not in the first mode, the first link includes a second number of available spatial streams for reception or transmission. The first number is greater than the second number.

In some embodiments, if the AP MLD is in the first mode, available spatial streams of the first link of the AP MLD include an available spatial stream transitioned from a second link to the first link, and the second link is one of links of the AP MLD other than the first link.

In some embodiments, the first communication unit 2901 is further configured to transmit a first frame, and the first frame indicates that the AP MLD is to start or end the first mode.

In some embodiments, the first mode includes a standalone operating mode and a group operating mode.

In the standalone operating mode, the AP MLD transmits the first frame to the non-access point device. The first frame indicates that the AP MLD is to start or end the first mode.

In the group operating mode, the AP MLD broadcasts the first frame.

In some embodiments, the apparatus for wireless communication 2900 further includes: a first control unit 2902, which is configured to enter or end the first mode after completing transmission of the first frame if an operating mode of the first mode is the group operating mode.

In some embodiments, the apparatus 2900 for wireless communication further includes: a second control unit 2903, which is configured to enter or quit the first mode at a second moment after a first moment, or after completing reception of a second frame if an operating mode of the first mode is the standalone operating mode. An interval between the second moment and the first moment has a first duration, the first moment is a moment when transmission of the first frame is completed, and the second frame is configured to respond to the first frame.

In some embodiments, if the first frame indicates that the AP MLD is to start the first mode, the first frame carries first indication information. The first indication information indicates that the AP MLD is to start the first mode.

In some embodiments, if the first frame indicates that the AP MLD is to end the first mode, the first frame carries second indication information. The second indication information indicates that the AP MLD is to end the first mode.

In some embodiments, the first frame further carries third indication information. The third indication information indicates that an operating mode of the AP MLD is a standalone operating mode.

In some embodiments, the first frame further carries fourth indication information. The fourth indication information indicates that an operating mode of the AP MLD is a group operating mode.

In some embodiments, the first frame includes a first identifier, the first identifier having a first value is the first indication information, and the first instruction information indicates that the AP MLD is to start the first mode. The first identifier having a second value is the second indication information, and the second indication information indicates that the AP MLD is to end the first mode.

In some embodiments, the first frame includes a second identifier, the second identifier having a third value is third indication information, and the third indication information indicates that the operating mode of the first mode is the standalone operating mode. The second identifier having a fourth value is fourth indication information, and the fourth indication information indicates that the operating mode of the first mode is the group operating mode.

In some embodiments, the first frame includes a third identifier indicating the first link.

In some embodiments, the first frame is a set frame or an enhanced multi-link operating mode notification EML OMN frame.

In some embodiments, if the first frame is a set frame, the action domain of the set frame includes the first identifier, indicating that the AP MLD is to start or end the first mode.

In some embodiments, the action domain of the set frame includes at least one of the following fields: a category field, an action field, or an enhanced-link control field. The first identifier is in the enhanced-link control field.

In some embodiments, the enhanced-link control field further includes the second identifier, indicating the operating mode of the AP MLD.

In some embodiments, the enhanced-link control field further includes the third identifier, indicating the first link.

In some embodiments, if the first frame is an EML OMN frame, the reserved field of the EML OMN frame includes the first identifier, indicating that the AP MLD is to start or end the first mode.

In some embodiments, the reserved field of the EML OMN frame further includes the second identifier, indicating the operating mode of the first mode.

In some embodiments, the EML OMN frame further includes the third identifier indicating the first link.

In some embodiments, the first mode includes the following operations.

In the first operation, the first link and the second link(s) of the AP MLD are in a listening state, and the second link(s) is/are the link(s) of the AP MLD other than the first link.

In the second operation, the first link uses spatial stream(s) less than or equal to the second number for the frame exchange, and the second link(s) has/have available spatial streams that may be used for the frame exchange.

In the third operation, the first link uses spatial streams greater than the second number and less than or equal to the first number for the frame exchange, and the second link cannot perform the frame exchange.

In some embodiments, the apparatus for wireless communication 2900 includes a third control unit 2904, which is configured to enter the first operation after starting the first mode.

In some embodiments, the apparatus for wireless communication 2900 includes a fourth control unit 2905, which is configured to transition from the first operation or the second operation to the third operation.

In some embodiments, if a number of available spatial streams supported by the non-access point device is less than or equal to the second number, the AP MLD enters the second operation from the first operation when performing the frame exchange.

In some embodiments, if a number of available spatial streams supported by the non-access point device is greater than the second number, when performing frame exchange, the AP MLD enters the second operation from the first operation and transitions from the second operation to the third operation, or transitions from the first operation to the third operation.

In some embodiments, the duration for the AP MLD to transition from the first operation or the second operation to the third operation is less than or equal to the second duration.

In some embodiments, the trigger opportunity for the AP MLD to transition to the third operation includes at least one of the following.
the AP MLD obtains a transmission opportunity of the first link, and the transmission opportunity is used for transmitting a data frame.
the AP MLD receives a data frame satisfying a first rule over the first link.
the AP MLD receives a third frame over the first link, and the third frame is configured to request transmitting a data frame to the AP MLD.

In some embodiments, the first communication unit 2901 is further configured to, after obtaining the transmission opportunity of the first link, transmit a fourth frame to the non-access point device over the first link. The fourth frame indicates that a network allocation vector of the first link is a third duration, the third duration is greater than or equal to a second duration, and the second duration is a duration needed for the AP MLD to transition from the first operation or the second operation to the third operation.

In some embodiments, the first communication unit 2901 is further configured to, after obtaining the transmission opportunity of the first link, transmit at least one fifth frame to the non-access point device over the first link. A transmission duration of the at least one fifth frame is greater than or equal to a second duration, and the second duration is a duration needed for the AP MLD to transition from the first operation or the second operation to the third operation.

In some embodiments, the fifth frame includes at least one of the following:
a Null Data Packet Announcement (NDPA) and a Neighbor Discovery Protocol (NDP);
a clear to send (CTS) to self frame;
a quality of service-null (QoS-null) frame; or
a data frame.

In some embodiments, the first rule includes at least one of the following: a set frame format or a set transmission rate.

In some embodiments, the third frame includes fifth indication information, which is configured to request transmitting a data frame to the AP MLD.

In some embodiments, the third frame includes an A-Control field, which includes a control ID field and a control information field. When the control ID field has a fifth value, the control information field includes the first field, and the fifth indication information is the first field having a sixth value.

In some embodiments, the apparatus 2900 for wireless communication includes a fifth control unit 2906, which is configured to transition from the third operation to the first operation.

In some embodiments, the duration for the AP MLD to transition from the third operation to the first operation is less than or equal to the fourth duration.

In some embodiments, the trigger opportunity for the AP MLD to transition to the first operation includes at least one of the following:
the AP MLD actively completes transmission of a data frame;
a media access control (MAC) layer of the AP MLD receives no sixth indication information from a physical layer of the AP MLD in a fifth duration after the AP MLD receives the data frame, if no instant response to a data frame received by the AP MLD is required; the sixth indication information indicates that a first acknowledgement frame is received, the first acknowledgement frame is configured to respond to the transmitted data frame, and the fifth duration is a duration needed for receiving the first acknowledgement frame;
the MAC layer of the AP MLD receives no sixth indication information in the fifth duration after the AP MLD completes transmission of the first acknowledgement frame if an instant response to the data frame received by the AP MLD is required; or
the AP MLD transmits no first acknowledgement frame within an SIFS if an instant response to the data frame received by the AP MLD is required.

In some embodiments, the first communication unit 2901 is further configured to transmit a sixth frame to the non-access point device. The sixth frame includes seventh indication information, indicating that the AP MLD supports the first mode.

In some embodiments, the seventh indication information is in a second field of the sixth frame, the second field is in a basic multi-link element and is a set field or an enhanced multi-link EML capabilities field.

In some embodiments, the second field further includes at least one of the following information:
a second duration, which is a duration needed for the AP MLD to transition from the first operation or the second operation of the first mode to the third operation of the first mode;
a fourth duration, which is a duration needed for the AP MLD to transition from the third operation to the first operation; or
a first duration, which is a valid duration of the first frame transmitted by the AP MLD, and the first frame indicates that the AP MLD is to start or end the first mode.

In some embodiments, if the second field is a set field, a third field set in the basic multi-link element has a seventh value, then the basic multi-link element includes the set field, and the third field indicates whether the basic multi-link element includes the set field.

In some embodiments, the set field includes a first sub-field and at least one of the following sub-fields: a second sub-field, a third sub-field, or a fourth sub-field. The first sub-field indicates the seventh indication information, the second sub-field indicates the second duration, the third sub-field indicates the fourth duration, and the fourth sub-field indicates the first duration.

In some embodiments, if the second field is an EML capabilities field, an EML capabilities present field in the basic multi-link element has an eighth value, then the basic multi-link element includes the EML capabilities field.

In some embodiments, the second field is an EML capabilities field, and the seventh indication information is in a fourth field of the EML capabilities field. The fourth field is an enhanced multi-link single radio (EML SR) support field or a reserved field in the EML capabilities field.

In some embodiments, an EMLSR Padding Delay field in the EML capabilities field indicates the second duration, and the second duration is the duration needed for the AP MLD to transition from the first operation or the second operation of the first mode to the third operation of the first mode.

In some embodiments, an EMLSR Transition Delay field in a second EML capabilities field indicates the fourth duration, and the fourth duration is the duration needed for the AP MLD to transition from the third operation of the first mode to the first operation of the first mode.

In some embodiments, a Transition Timeout field in the second EML capabilities field indicates the first duration, the first duration is a valid duration of the first frame transmitted by the AP MLD, and the first frame indicates that the AP MLD is to start or end the first mode.

In some embodiments, the first link is a primary link of the links of the AP MLD, and the second link is a secondary link of the links of the AP MLD.

In some embodiments, the non-access point device is a non-access point multi-link device (Non AP MLD) or a Non AP station device.

FIG. 30 is a structural composition diagram of an apparatus for wireless communication according to an embodiment of the disclosure, which is applied to a non-access point device. As shown in FIG. 30, the apparatus 3000 for wireless communication includes a second communication unit 3001.

The second communication unit 3001 is configured to perform frame exchange with an access point multi-link device over a first link. A link mode of the AP MLD includes a first mode. When the AP MLD is in the first mode, the first link includes a first number of available spatial streams for reception or transmission. When the AP MLD is not in the first mode, the first link includes a second number of available spatial streams for reception or transmission. The first number is greater than the second number.

In some embodiments, if the AP MLD is in the first mode, available spatial streams of the first link of the AP MLD include an available spatial stream transitioned from a second link to the first link, and the second link is one of links of the AP MLD other than the first link.

In some embodiments, the second communication unit 3001 is further configured to receive a first frame transmitted by the AP MLD, and the first frame indicates that the AP MLD is to start or end the first mode.

In some embodiments, the first mode includes a standalone operating mode and a group operating mode.

In the standalone operating mode, the AP MLD transmits the first frame to the non-access point device. The first frame indicates that the AP MLD is to start or end the first mode.

In the group operating mode, the AP MLD broadcasts the first frame.

In some embodiments, if the first frame indicates that the AP MLD is to start the first mode, the first frame carries first indication information. The first indication information indicates that the AP MLD is to start the first mode.

In some embodiments, if the first frame indicates that the AP MLD is to end the first mode, the first frame carries second indication information. The second indication information indicates that the AP MLD is to end the first mode.

In some embodiments, the first frame further carries third indication information. The third indication information indicates that an operating mode of the AP MLD is a standalone operating mode.

In some embodiments, the first frame further carries fourth indication information. The fourth indication information indicates that an operating mode of the AP MLD is a group operating mode.

In some embodiments, the first frame includes a first identifier, the first identifier having a first value is the first indication information, and the first indication information indicates that the AP MLD is to start the first mode. The first identifier having a second value is the second indication information, and the second indication information indicates that the AP MLD is to end the first mode.

In some embodiments, the first frame includes a second identifier, the second identifier having a third value is third indication information, and the third indication information indicates that the operating mode of the first mode is the standalone operating mode. The second identifier having a fourth value is fourth indication information, and the fourth indication information indicates that the operating mode of the first mode is the group operating mode.

In some embodiments, the first frame includes a third identifier indicating the first link.

In some embodiments, the first frame is a set frame or an enhanced multi-link operating mode notification (EML OMN) frame.

In some embodiments, if the first frame is a set frame, the action domain of the set frame includes the first identifier, indicating that the AP MLD is to start or end the first mode.

In some embodiments, the action domain of the set frame includes at least one of the following fields: a category field, an action field, or an enhanced-link control field. The first identifier is in the enhanced-link control field.

In some embodiments, the enhanced-link control field further includes the second identifier, indicating the operating mode of the AP MLD.

In some embodiments, the enhanced-link control field further includes the third identifier, indicating the first link.

In some embodiments, if the first frame is an EML OMN frame, the reserved field of the EML OMN frame includes the first identifier, indicating that the AP MLD is to start or end the first mode.

In some embodiments, the reserved field of the EML OMN frame further includes the second identifier, indicating the operating mode of the first mode.

In some embodiments, the EML OMN frame further includes the third identifier, which indicates the first link.

In some embodiments, the first mode includes the following operations.

The first operation, in which the first link and the second link(s) of the AP MLD are in a listening state, and the second link(s) is/are the link(s) of the AP MLD other than the first link.

The second operation, in which the first link uses a number of spatial stream(s), which is less than or equal to the second number, for the frame exchange, and the second link(s) has/have available spatial streams that are capable of being used for the frame exchange.

The third operation, in which the first link uses a number of spatial streams, which is greater than the second number and less than or equal to the first number, for the frame exchange, and the second link cannot perform the frame exchange.

In some embodiments, the trigger opportunity for transitioning to the third operation includes at least one of the following.
the AP MLD obtains a transmission opportunity of the first link, and the transmission opportunity is used for transmitting a data frame.
the AP MLD receives a data frame satisfying a first rule over the first link.
the AP MLD receives a third frame over the first link, and the third frame is configured to request transmitting a data frame to the AP MLD.

In some embodiments, the second communication unit 3001 is further configured to receive a fourth frame transmitted by the AP MLD over the first link. The fourth frame indicates that a network allocation vector of the first link is a third duration, the third duration is greater than or equal to a second duration, and the second duration is a duration needed for the AP MLD to transition from the first operation or the second operation to the third operation.

In some embodiments, the second communication unit 3001 is further configured to receive at least one fifth frame transmitted by the AP MLD over the first link. A transmission duration of the at least one fifth frame is greater than or equal to a second duration, and the second duration is a duration needed for the AP MLD to transition from the first operation or the second operation to the third operation.

In some embodiments, the fifth frame includes at least one of the following.

A Null Data Packet Announcement (NDPA) and a Neighbor Discovery Protocol (NDP).

A clear to send (CTS) to self frame.

A quality of service-null (QoS-null) frame.

A data frame.

In some embodiments, the first rule includes at least one of the following.

A set frame format or a set transmission rate.

In some embodiments, the third frame includes fifth indication information, which is configured to request transmitting a data frame to the AP MLD.

In some embodiments, the third frame includes an A-Control field, which includes a control ID field and a control information field. When the control ID field has a fifth value, the control information field includes the first field, and the fifth indication information is the first field having a sixth value.

In some embodiments, the second communication unit 3001 is further configured to receive a sixth frame transmitted by the AP MLD. The sixth frame includes seventh indication information, indicating that the AP MLD supports the first mode.

In some embodiments, the seventh indication information is in a second field of the sixth frame, the second field is in a basic multi-link element and is a set field or an enhanced multi-link EML capabilities field.

In some embodiments, the second field further includes at least one of the following information.

A second duration, which is a duration needed for the AP MLD to transition from the first operation or the second operation of the first mode to the third operation of the first mode.

A fourth duration, which is a duration needed for the AP MLD to transition from the third operation to the first operation.

A first duration, which is a valid duration of the first frame transmitted by the AP MLD, and the first frame indicates that the AP MLD is to start or end the first mode.

In some embodiments, if the second field is the set field, a third field set in the basic multi-link element has a seventh value, then the basic multi-link element includes the set field, and the third field indicates whether the basic multi-link element includes the set field.

In some embodiments, the set field includes a first sub-field and at least one of the following sub-fields: a second sub-field, a third sub-field, or a fourth sub-field. The first sub-field indicates the seventh indication information, the second sub-field indicates the second duration, the third sub-field indicates the fourth duration, and the fourth sub-field indicates the first duration.

In some embodiments, if the second field is the EML capabilities field, an EML capabilities present field in the basic multi-link element has a eighth value, then the basic multi-link element includes the EML capabilities field.

In some embodiments, the second field is the EML capabilities field, and the seventh indication information is in a fourth field of the EML capabilities field. The fourth field is an enhanced multi-link single radio (EML SR) support field or a reserved field in the EML capabilities field.

In some embodiments, an EMLSR Padding Delay field in the EML capabilities field indicates the second duration, and the second duration is the duration needed for the AP MLD to transition from the first operation or the second operation of the first mode to the third operation of the first mode.

In some embodiments, an EMLSR Transition Delay field in a second EML capabilities field indicates the fourth duration, and the fourth duration is the duration needed for the AP MLD to transition from the third operation of the first mode to the first operation of the first mode.

In some embodiments, a Transition Timeout field in the second EML capabilities field indicates the first duration, the first duration is a valid duration of the first frame transmitted by the AP MLD, and the first frame indicates that the AP MLD is to start or end the first mode.

In some embodiments, the first link is a primary link of the links of the AP MLD, and the second link is a secondary link of the links of the AP MLD.

In some embodiments, the non-access point device is a non-access point multi-link device (Non AP MLD) or a Non AP station device.

Those skilled in the art should understand that relevant description of the above apparatus for wireless communication according to embodiments of the disclosure can be understood with reference to the relevant description of the method for wireless communication according to embodiments of the disclosure.

FIG. 31 illustrates a schematic structural diagram of a communication device 3100 according to embodiments of the disclosure. The communication device may be an AP MLD or a non-access point device. The communication device 3100 as illustrated in FIG. 31 includes a processor 3110. The processor 3110 may call and run a computer program from a memory to implement the method according to embodiments of the disclosure.

In an example, as illustrated in FIG. 31, the communication device 3100 may further include a memory 3120. Herein, the processor 3110 may call and run a computer program from the memory 3120 to implement the method in embodiments of the present disclosure.

The memory 3120 may be a device independent from the processor 3110, or may be integrated in the processor 3110.

In an example, as illustrated in FIG. 31, the communication device 3100 may further include a transceiver 3130. The processor 3110 may control the transceiver 3130 to communicate with other devices, in particular to send information or data to other devices or receive information or data from other device.

The transceiver 3130 may include a transmitter and a receiver. The transceiver 3130 may further include an antenna(s), and there may be one or more antennas.

In an example, the communication device 3100 may specifically be the AP MLD of embodiments of the present disclosure, and the communication device 3100 may implement the corresponding flows implemented by the AP MLD in various methods of embodiments of the present disclosure, and will not be repeated here for the sake of brevity.

In an example, the communication device 3100 may specifically be the non-access point device of embodiments of the disclosure, and the communication device 3100 may implement the corresponding flows implemented by the non-access point device in various methods of embodiments of the disclosure, and will not be repeated here for the sake of brevity.

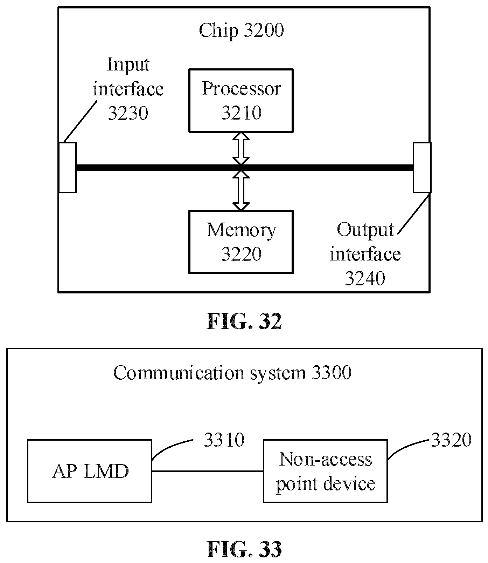

FIG. 32 illustrates a schematic structural diagram of a chip according to embodiments of the disclosure. The chip 3200 as illustrated in FIG. 32 includes a processor 3210. The processor 3210 may call and run a computer program from a memory to implement the method according to embodiments of the disclosure.

In an example, as illustrated in FIG. 32, the chip 3200 may further include a memory 3220. The processor 3210 may call and run a computer program from the memory 3220 to implement the method according to embodiments of the disclosure.

The memory 3220 may be a device independent from the processor 3210, or may e integrated in the processor 3210.

In an example, the chip 3200 may further include an input interface 3230. The processor 3210 may control the input interface 3230 to communicate with other devices or chips, in particularly to acquire information or data sent by other devices or chips.

In an example, the chip 3200 may further include an output interface 3240. The processor 3210 may control the output interface 3240 to communicate with other devices or chips, in particularly to output information or data to other devices or chips.

In an example, the chip may be applied to the AP MLD of embodiments of the present disclosure, and the chip may implement the corresponding flows implemented by the AP MLD in various methods of embodiments of the present disclosure, and will not repeated herein for the sake of brevity.

In an example, the chip may be applied to the non-access point device of embodiments of the present disclosure, and the chip may implement the corresponding flows implemented by the non-access point device in various methods of embodiments of the present disclosure, and will not repeated herein for the sake of brevity.

It should be understood that, the chip mentioned in embodiments of the disclosure may also be referred to as a system-level chip, a system chip, a chip system or a system-on-chip.

FIG. 33 illustrates a schematic block diagram of a communication system 3300 according to embodiments of the disclosure. As shown in FIG. 33, the communication system 3300 includes an AP MLD 3310 and a non-access point device 3320.

Herein, the AP MLD3310 may be configured to implement the corresponding functions implemented by the AP MLD in the above method, and the non-access point device 3320 may be configured to implement the corresponding functions implemented by the non-access point device in the above method, and will not be repeated herein for the sake of brevity.

It should be understood that the processor of embodiments of the disclosure may be an integrated circuit chip, and has the capability of signal processing. During implementation, the various steps of in the above method embodiment may be completed by an integrated logic circuit in hardware form or instructions in software form in a processor. The above processor may be a general-purpose processor, a digital signal processor (DSP), an application specific integrated circuit (ASIC), a field programmable gate array (FPGA), or another programmable logical device, a discrete gate or a transistor logical device, or a discrete hardware component. The various methods, steps and logic diagrams disclosed in embodiments of the present disclosure may be implemented or performed. The universal processor may be a microprocessor or the processor may also be any conventional processor and the like. The steps of the method disclosed in combination with embodiments of the present disclosure may be directly embodied as being performed by a hardware decoding processor or a combination of the hardware and software modules in the decoding processor. The software module may be located in a mature storage medium in the art such as a random access memory, a flash memory, a read-only memory, a programmable read-only memory, an electrically erasable programmable, or a register. The storage medium is in a memory, and a processor reads information from the memory to implement steps of the above methods in combination with the hardware.

It can be understood that the memory in embodiments of the present disclosure may be volatile memory or non-volatile memory or may include both volatile and non-volatile memory. The non-volatile memory may be a read-only memory (ROM), a programmable ROM (PROM), an erasable PROM (RPROM), an electrically RPROM (EEPROM), or a flash memory. The volatile memory may be a random access memory (RAM), that is used as an external cache. By way of example, but not limiting description, RAMs in many forms are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a directly rambus RAM (DR RAM). It should be noted that, the memory in the system and method described herein is intended to include but not limited to memories of these and any other suitable types.

It should be understood that the memory described above is exemplary, but not limiting. For example, the memory in embodiments of the present disclosure may also be SRAM, DRAM, SDRAM, DDR SDRAM, ESDRAM, SLDRAM, and DR RAM, etc. That is to say, the memory in embodiments of the disclosure is intended to include but not limited to memories of these and any other suitable types.

Embodiments of the disclosure further provide a computer-readable storage medium for storing a computer program.

In an example, the computer-readable storage medium may be applied to the AP MLD in embodiments of the disclosure, and the operation of the computer program causes a computer to perform the corresponding flows implemented by the AP MLD in various methods of embodiments of the disclosure, and will not repeated herein for the sake of brevity.

In an example, the computer-readable storage medium may be applied to the non-access point device in embodiments of the disclosure, and the operation of the computer program causes a computer to perform the corresponding flows implemented by the non-access point device in various methods of embodiments of the disclosure, and will not repeated herein for simplicity.

Embodiments of the disclosure further provide a computer program product including computer program instructions.

In an example, the computer program product may be applied to the AP MLD in embodiments of the disclosure, and the operation of the computer program instructions cause a computer to perform the corresponding flows implemented by the AP MLD in various methods of embodiments of the disclosure, and will not repeated herein for the sake of brevity.

In an example, the computer program product may be applied to the non-access point device in embodiments of the disclosure, and the operation of the computer program causes a computer to perform the corresponding flows implemented by the non-access point device in various methods of embodiments of the disclosure, and will not repeated herein for simplicity.

Embodiments of the disclosure further provide a computer program.

In an example, the computer program may be applied to the AP MLD of embodiments of the disclosure, and the computer program, when running on a computer, enables the computer to perform corresponding procedures that are implemented by the AP MLD in various methods according to embodiments of the disclosure, which is not described here again for simplicity.

In an example, the computer program may be applied to the non-access point device in embodiments of the disclosure, and the computer program, when running on a computer, enables the computer to perform the corresponding flows implemented by the non-access point device in various methods of embodiments of the disclosure, and will not repeated herein for simplicity.

Those of ordinary skill in the art may realize that the units and algorithm steps of various examples described in combination with embodiments disclosed herein may be implemented by electronic hardware, or a combination of computer software and electronic hardware. Whether the functions are performed in form of hardware or software form depends on the specific application and design constraint conditions of the technical solution. Professionals may use a different method to realize the described function for each specific application, and such implementation should not be construed as extending beyond the scope of the disclosure

Those skilled in the art may clearly appreciate that for convenience and simplicity of description, the particular operation procedures of the system, apparatus and units described above may refer to corresponding procedures in the foregoing method embodiment, which will not be described herein again.

In some embodiments provided in the disclosure, it is to be understood that the disclosed system, device and method may be implemented in other ways. For example, the device embodiment described above is only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of embodiments according to actual requirements.

In addition, various functional units in embodiments of the disclosure may be integrated in one processing unit, or may exist separately physically; or two or more units may be integrated in one unit.

If implemented in form of software functional units and sold or used as independent product, the functions may be stored in a computer-readable storage medium. Based on such understanding, the technical solution of the disclosure substantially or in part making contributions to the related art or a part of the technical solution may be embodied in a software product. The computer software product is stored in a storage medium, and includes several instructions to enable a computer device (which may be a personal computer, a server, a network device or the like) to perform all or some steps of the method according to various embodiments of the disclosure. The foregoing storage medium includes various media capable of storage program codes such as a USB flash drive, a mobile hard disk drive, a read-only memory (ROM), a random access memory (RAM), a magnetic disc, or a compact disc (CD).

What is stated above is merely detailed description of the disclosure, but the scope of protection of the disclosure is not limited thereto. Any modification or replacement that is easily conceivable by those familiar with the related art within the technical range disclosed by the disclosure shall fall within the scope of protection of the disclosure. Therefore, the scope of protection of the disclosure should be subjected to the claimed scope of the claims.

## Claims

1. A method for wireless communication, comprising:
performing, by an access point multi-link device (AP MLD), frame exchange with a non-access point device over a first link, wherein a link mode of the AP MLD comprises a first mode; when the AP MLD is in the first mode, the first link comprises a first number of available spatial streams for reception or transmission; when the AP MLD is not in the first mode, the first link comprises a second number of available spatial streams for reception or transmission; and the first number is greater than the second number.

2. The method of claim 1, wherein if the AP MLD is in the first mode, available spatial streams of the first link of the AP MLD comprise an available spatial stream transitioned from a second link to the first link, and the second link is one of links of the AP MLD other than the first link.

3. The method of claim 1 or 2, further comprising:
transmitting, by the AP MLD, a first frame indicating that the AP MLD is to start or end the first mode.

4. The method of claim 3, wherein the first mode comprises a standalone operating mode and a group operating mode;
in the standalone operating mode, the AP MLD transmits the first frame to the non-access point device, wherein the first frame indicates that the AP MLD is to start or end the first mode; and
in the group operating mode, the AP MLD broadcasts the first frame.

5. The method of claim 4, wherein if an operating mode of the first mode is the group operating mode, the method further comprises:
entering or ending, by the AP MLD, the first mode after completing transmission of the first frame.

6. The method of claim 4, wherein if an operating mode of the first mode is the standalone operating mode, the method further comprises:
entering or quitting, by the AP MLD, the first mode, at a second moment after a first moment, or after completing reception of a second frame, wherein an interval between the second moment and the first moment has a first duration, the first moment is a moment when transmission of the first frame is completed, and the second frame is configured to respond to the first frame.

7. The method of any one of claims 3 to 6, wherein if the first frame indicates that the AP MLD is to start the first mode, the first frame carries first indication information, wherein the first indication information indicates that the AP MLD is to start the first mode.

8. The method of any one of claims 3 to 6, wherein if the first frame indicates that the AP MLD is to end the first mode, the first frame carries second indication information, wherein the second indication information indicates that the AP MLD is to end the first mode.

9. The method of claim 7 or 8, wherein the first frame further carries third indication information, wherein the third indication information indicates that an operating mode of the AP MLD is a standalone operating mode.

10. The method of claim 7 or 8, wherein the first frame further carries fourth indication information, wherein the fourth indication information indicates that an operating mode of the AP MLD is a group operating mode.

11. The method of any one of claims 3 to 10, wherein the first frame comprises a first identifier, the first identifier having a first value is first indication information, wherein the first indication information indicates that the AP MLD is to start the first mode, and
the first identifier having a second value is second indication information, wherein the second indication information indicates that the AP MLD is to end the first mode.

12. The method of any one of claims 3 to 11, wherein the first frame comprises a second identifier, the second identifier having a third value is third indication information, wherein the third indication information indicates that an operating mode of the first mode is a standalone operating mode, and
the second identifier having a fourth value is fourth indication information, wherein the fourth indication information indicates that the operating mode of the first mode is a group operating mode.

13. The method of any one of claims 3 to 12, wherein the first frame comprises a third identifier, wherein the third identifier indicates the first link.

14. The method of any one of claims 3 to 13, wherein the first frame is a set frame or an enhanced multi-link operating mode notification (EML OMN) frame.

15. The method of claim 14, wherein if the first frame is the set frame, an action domain of the set frame comprises a first identifier, wherein the first identifier indicates that the AP MLD is to start or end the first mode.

16. The method of claim 15, wherein the action domain of the set frame comprises at least one of: a category field, an action field, or an enhanced mode control field, and the first identifier is in the enhanced mode control field.

17. The method of claim 16, wherein the enhanced mode control field further comprises a second identifier, wherein the second identifier indicates an operating mode of the AP MLD.

18. The method of claim 16 or 17, wherein the enhanced mode control field further comprises a third identifier, wherein the third identifier indicates the first link.

19. The method of claim 14, wherein if the first frame is the EML OMN frame, a reserved field of the EML OMN frame comprises a first identifier, wherein the first identifier indicates that the AP MLD is to start or end the first mode.

20. The method of claim 19, wherein the reserved field of the EML OMN frame further comprises a second identifier, wherein the second identifier indicates an operating mode of the first mode.

21. The method of claim 19 or 20, wherein the EML OMN frame further comprises a third identifier, wherein the third identifier indicates the first link.

22. The method of any one of claims 1 to 21, wherein the first mode comprises:
a first operation in which the first link and a second link of the AP MLD are in a listening state, and the second link is one of links of the AP MLD other than the first link;
a second operation in which frame exchange is performed over the first link using a number of spatial streams less than or equal to the second number, wherein an available spatial stream exists in the second link and the second link supports frame exchange; and
a third operation in which frame exchange is performed over the first link using a number of spatial streams greater than the second number and less than or equal to the first number, wherein the second link does not support frame exchange.

23. The method of claim 22, further comprising:
entering, by the AP MLD, the first operation after starting the first mode.

24. The method of claim 22 or 23, further comprising:
transitioning, by the AP MLD, from the first operation or the second operation to the third operation.

25. The method of claim 23 or 24, wherein,
if a number of available spatial streams supported by the non-access point device is less than or equal to the second number, the AP MLD enters the second operation from the first operation when performing the frame exchange.

26. The method of claim 24, wherein:
if a number of available spatial streams supported by the non-access point device is greater than the second number,
entering, by the AP MLD when performing frame exchange, the second operation from the first operation and transitioning from the second operation to the third operation, or
transitioning, by the AP MLD when performing frame exchange, from the first operation to the third operation.

27. The method of any one of claims 24 to 26, wherein a duration for the AP MLD to transition from the first operation or the second operation to the third operation is less than or equal to a second duration.

28. The method of claim 24 or 25, wherein a trigger opportunity for the AP MLD to transition to the third operation comprises at least one of the following:
the AP MLD obtains a transmission opportunity of the first link, wherein the transmission opportunity is used for transmitting a data frame;
the AP MLD receives a data frame satisfying a first rule over the first link; or
the AP MLD receives a third frame over the first link, wherein the third frame is configured to request transmitting a data frame to the AP MLD.

29. The method of claim 28, wherein after the AP MLD obtains the transmission opportunity of the first link, the method further comprises:
transmitting, by the AP MLD, a fourth frame to the non-access point device over the first link, wherein the fourth frame indicates that a network allocation vector of the first link is a third duration, the third duration is greater than or equal to a second duration, and the second duration is a duration needed for the AP MLD to transition from the first operation or the second operation to the third operation.

30. The method of claim 28, wherein
after the AP MLD obtains the transmission opportunity of the first link, the method further comprises:
transmitting, by the AP MLD, at least one fifth frame to the non-access point device over the first link, wherein a transmission duration of the at least one fifth frame is greater than or equal to a second duration, and the second duration is a duration needed for the AP MLD to transition from the first operation or the second operation to the third operation.

31. The method of claim 30, wherein the fifth frame comprises at least one of:
a Null Data Packet Announcement (NDPA) and a Neighbor Discovery Protocol (NDP);
a clear to send (CTS) to self frame;
a quality of service-null (QoS-null) frame; or
a data frame.

32. The method of claim 28, wherein the first rule comprises at least one of:
a set frame format, or a set transmission rate.

33. The method of claim 28, wherein the third frame comprises fifth indication information, and the fifth indication information is configured to request transmitting a data frame to the AP MLD.

34. The method of claim 33, wherein the third frame comprises an A-Control field, and the A-Control field comprises a control identification (ID) field and a control information field; and when the control ID field has a fifth value, the control information field comprises a first field, and the fifth indication information is the first field having a sixth value .

35. The method of any one of claims 24 to 34, further comprising:
transitioning, by the AP MLD, from the third operation to the first operation.

36. The method of claim 35, wherein a duration for the AP MLD to transition from the third operation to the first operation is less than or equal to a fourth duration.

37. The method of claim 35 or 36, wherein a trigger opportunity for the AP MLD to transition to the first operation comprises at least one of the following:
the AP MLD actively completes transmission of a data frame;
a media access control (MAC) layer of the AP MLD receives no sixth indication information from a physical layer of the AP MLD in a fifth duration after the AP MLD receives the data frame, if no instant response to a data frame received by the AP MLD is required, wherein the sixth indication information indicates that a first acknowledgement frame is received, the first acknowledgement frame is configured to respond to the data frame, and the fifth duration is a duration needed for receiving the first acknowledgement frame;
the MAC layer of the AP MLD receives no sixth indication information in the fifth duration after the AP MLD completes transmission of the first acknowledgement frame, if an instant response to the data frame received by the AP MLD is required; or
the AP MLD transmits no first acknowledgement frame within a short inter-frame space (SIFS), if an instant response to the data frame received by the AP MLD is required.

38. The method of any one of claims 1 to 37, further comprising:
transmitting, by the AP MLD, a sixth frame to the non-access point device, wherein the sixth frame comprises seventh indication information, wherein the seventh indication information indicates that the AP MLD supports the first mode.

39. The method of claim 38, wherein
the seventh indication information is in a second field of the sixth frame, the second field is in a base multi-link element, and the second field is a set field or an enhanced multi-link (EML) capabilities field.

40. The method of claim 39, wherein the second field further comprises at least one of:
a second duration that is a duration needed for the AP MLD to transition from the first operation or the second operation of the first mode to the third operation of the first mode;
a fourth duration that is a duration needed for the AP MLD to transition from the third operation to the first operation; or
a first duration that is a valid duration of a first frame transmitted by the AP MLD, wherein the first frame indicates that the AP MLD is to start or end the first mode.

41. The method of claim 39 or 40, wherein if the second field is the set field and a third field set in the base multi-link element has a seventh value, the base multi-link element comprises the set field, and the third field indicates whether the base multi-link element comprises the set field.

42. The method of claim 41, wherein the set field comprises a first sub-field and at least one of: a second sub-field, a third sub-field or a fourth sub-field, the first sub-field indicates the seventh indication information, the second sub-field indicates a second duration, the third sub-field indicates a fourth duration, and the fourth sub-field indicates a first duration.

43. The method of claim 39 or 40, wherein if the second field is the EML capabilities field and an EML capabilities present field in the base multi-link element has an eighth value, the base multi-link element comprises the EML capabilities field.

44. The method of claim 39, 40 or 43, wherein the second field is an EML capabilities field, the seventh indication information is in a fourth field in the EML capabilities field, and the fourth field is an enhanced multi-link single radio (EML SR) support field or reserved field in the EML capabilities field.

45. The method of claim 39, 40, 43 or 44, wherein an enhanced multi-link single radio (EML SR) padding delay field in the EML capabilities field indicates a second duration, wherein the second duration is a duration needed for the AP MLD to transition from a first operation or a second operation of the first mode to a third operation of the first mode.

46. The method of any one of claims 39, 40, and 43 to 45, wherein an enhanced multi-link single radio (EML SR) transition delay field in a second EML capabilities field indicates a fourth duration needed for the AP MLD to transition from a third operation of a first mode to the first operation of the first mode.

47. The method of any one of claims 39, 40, and 43 to 46, wherein a Transition Timeout field in a second EML capabilities field indicates a first duration that is a valid duration of a first frame transmitted by the AP MLD, and the first frame indicates that the AP MLD is to start or end the first mode.

48. The method of any one of claims 1 to 47, wherein the first link is a primary link of links of the AP MLD, and a second link is a secondary link of the links of the AP MLD.

49. The method of any one of claims 1 to 48, wherein the non-access point device is a non-access point multi-link device (Non-AP MLD) or a Non-AP station device.

50. A method for wireless communication, comprising:
performing, by a non-access point device, frame exchange with an access point multi-link device (AP MLD) over a first link, wherein a link mode of the AP MLD comprises a first mode; when the AP MLD is in the first mode, the first link comprises a first number of available spatial streams for reception or transmission; when the AP MLD is not in the first mode, the first link comprises a second number of available spatial streams for reception or transmission; and the first number is greater than the second number.

51. The method of claim 50, further comprising:
receiving, by the non-access point device from the AP MLD, a first frame indicating that the AP MLD is to start or end the first mode.

52. The method of claim 51, wherein the first frame is a set frame or an enhanced multi-link operating mode notification (EML OMN) frame.

53. The method of to any one of claims 50 to 52, wherein the first mode comprises:
a first operation in which the first link and a second link are in a listening state, and the second link is one of links of the AP MLD other than the first link;
a second operation in which frame exchange is performed over the first link using a number of spatial streams less than or equal to the second number, wherein an available spatial stream exists in the second link and the second link supports frame exchange; and
a third operation in which frame exchange is performed over the first link using a number of spatial streams greater than the second number and less than or equal to the first number, wherein the second link does not support frame exchange.

54. The method of any one of claims 50 to 53, further comprising:
receiving, by the non-access point device, a sixth frame from the AP MLD, wherein the sixth frame comprises seventh indication information, and the seventh indication information indicates that the AP MLD supports the first mode.

55. The method of any one of claims 50 to 54, wherein the first link is a primary link of links of the AP MLD, and a second link is a secondary link of the links of the AP MLD.

56. The method of any one of claims 50 to 55, wherein the non-access point device is a non-access point multi-link device (Non-AP MLD) or a Non-AP station device.

57. An access point multi-link device (AP MLD), comprising: a memory, configured to store a computer program; and a processor, configured to call and run the computer program stored in the memory to cause the AP MLD to perform the method of any one of claims 1 to 49.

58. A non-access point device, comprising: a memory, configured to store a computer program; and a processor, configured to call and run the computer program stored in the memory to cause the non-access point device to perform the method of any one of claims 50 to 56.

59. A chip, comprising: a processor, configured to call and run a computer program from a memory to cause a device on which the chip is installed to perform the method of any one of claims 1 to 49.

60. A chip, comprising: a processor, configured to call and run a computer program from a memory to cause a device on which the chip is installed to perform the method of any one of claims 50 to 56.

61. A computer-readable storage medium having stored thereon a computer program, the running of which causing a computer to perform the method of any one of claims 1 to 49.

62. A computer-readable storage medium having stored thereon a computer program, the running of which causing a computer to perform the method of any one of claims 50 to 56.

63. A computer program product, comprising computer program instructions, the running of which causing a computer to perform the method of any one of claims 1 to 49.

64. A computer program product, comprising computer program instructions, the running of which causing a computer to perform the method of any one of claims 50 to 56.

65. A computer program, the running of which causing a computer to perform the method of any one of claims 1 to 49.

66. A computer program, the running of which causing a computer to perform the method of any one of claims 50 to 56.
